# EUROPÄISCHE PATENTSCHRIFT

(11) **EP 3 389 547 B1**
(45) Veröffentlichungstag und Bekanntmachung des Hinweises auf die Patenterteilung: **17.03.2021**
(21) Anmeldenummer: 16825723.6
(22) Anmeldetag: 16.12.2016
(51) Int. Cl.: A61C 5/82, A61C 8/00

(54) **KOMBINATION, ANORDNUNG UND DENTALMEDIZINISCHES SET**
COMBINATION, SYSTEM AND DENTAL SET
ENSEMBLE, AGENCEMENT ET KIT MÉDICO-DENTAIRE

(30) Priorität: 18.12.2015 DE 102015122199
(43) Veröffentlichungstag der Anmeldung: 24.10.2018
(73) Patentinhaber: Rau, Hartmut, 42117 Wuppertal (DE)
(72) Erfinder: Rau, Hartmut, 42117 Wuppertal (DE)
(74) Vertreter: Brötz, Helmut
(86) Internationale Anmeldenummer: PCT/EP2016/081587
(87) Internationale Veröffentlichungsnummer: WO 2017/103212

(56) Entgegenhaltungen:
- EP-A1- 0 376 944
- EP-A1- 1 593 899
- WO-A2-91/00723
- WO-A2-2010/021535
- CN-U- 204 536 104
- DE-A1- 10 234 550
- DE-U1-202006 001 276
- US-A1- 2006 210 950
- US-A1- 2009 053 668
- US-A1- 2010 117 352

## Beschreibung

### Gebiet der Technik

Die vorliegende Erfindung betrifft gemäß einem ersten Aspekt eine Kombination, umfassend ein Implantat, ein Kofferdamtuch und ein Haltemittel zum lösbaren Halten des Kofferdamtuches an einem Implantatendabschnitt des Implantats, wobei das Haltemittel einen, insbesondere kreisrunden, Ring umformt, der an seinem Umfang geschlossen ist und der einen eine Ringdurchgangsöffnung berandenden Ringklemmabschnitt aufweist, und wobei der Implantatendabschnitt eine Implantatsaußenoberfläche aufweist. Bei dem Implantat handelt es sich vorzugsweise um ein Zahnimplantat, so dass man in diesem Zusammenhang auch von einer dentalmedizinischen Kombination sprechen kann.

### Stand der Technik

Ein Zahnimplantat dient herkömmlich zum Ersatz einer verlorenen Zahnwurzel und lässt sich dazu in eine in einen Kieferknochen eingebrachte Bohrung einsetzen und darin befestigen. Bekannt sind Implantate, die dazu einen Längenabschnitt mit einem Außengewinde besitzen, das in den Kieferknochen eingeschraubt werden kann. An einem freiliegenden, proximalen Längsende des Implantats kann dann eine Überkonstruktion angebracht werden, auf welche bei Gebrauch Kaukräfte einwirken. Das Implantat hat die Aufgabe, die Kaukräfte aufzunehmen und an den Kieferknochen zu übertragen. Eine Möglichkeit zur Befestigung einer Überkonstruktion ist, dass ein Implantat verwendet wird, das ein zu seiner proximalen Stirnseite hin offenes Innengewinde aufweist, dass auf die proximal freiliegende (vom Kieferknochen wegweisende) Stirn des Implantats ein sog. Aufbau (auch als Abutment bezeichnet), bei dem es sich um eine Hülse mit durchgehendem Verschraubungskanal handeln kann, aufgesetzt und mittels einer Schraube an dem Implantat angeschraubt wird und dass anschließend auf dem Aufbau und dem Implantatende eine Krone mittels dentalmedizinischem Zement befestigt wird. Dabei kann die Schwierigkeit entstehen, dass Zement aus der Kontaktfuge austritt. Um möglichst zu verhindern, dass es zu Verschutzungen des das Implantat umgebenden Knochens und des Zahnfleisches mit Zement kommt, kann versucht werden, den das Implantat an seinem Ende seitlich außen umgebenden Bereich mit einem Kofferdamtuch zu schützen. Dazu muss das Kofferdamtuch lösbar an der erforderlichen Position gehalten werden. Mit den herkömmlich als Haltemittel bekannten Kofferdam-Klammern bereitet dies aber Schwierigkeiten.

Aus der Druckschrift WO 2010/021535 A2 ist eine entfernbare Dentalprothesenbefestigungsvorrichtung und Hilfsmittel dafür bekannt. US 2006/0210950 A1 offenbart dentale Vorrichtungen in Gestalt eines temporären Implantates zur Sicherung einer Gummituchklemme. US 2009/0053668 A1 beschreibt dentale Dams und Verfahren zu ihrer Anwendung. Aus WO 91/00723 A2 sind Zusammenstellungen und Verfahren zum Reparieren und Abdichten von Gummi-Dams bekannt. US 2010/0117352 A1 offenbart eine Verbindungsanordnung für eine Rohrverschraubung. Aus EP 1 593 899 A1 ist eine Pressverbindungsanordnung bekannt. CN 204536104 U betrifft einen Schneidring für einen direkten Scherversuch. DE 20 2006 001 276 U1 beschreibt einen Instrumentensatz zur Entfernung stark zerstörter Zahnwurzelreste. Aus WO 88/082 83 A1 ist ein Werkzeug für ein prothetisches Teil bekannt. DE 102 34 550 A1 offenbart eine Vorrichtung zur axialen Erweiterung einer Bohrung in einer Knochensubstanz.

### Zusammenfassung der Erfindung

Vor diesem Hintergrund liegt der Erfindung die Aufgabe zugrunde, eine Kombination der eingangs genannten Art vorteilhaft weiterzubilden. Insbesondere wird angestrebt, dass dadurch die Handhabung vereinfacht werden kann. Auch wird insbesondere angestrebt, dass dadurch im Vergleich zu herkömmlichen Kombinationen dieser Art beim Gebrauch ein besserer Schutz der Implantatumgebung vor Verunreinigungen, insbesondere vor Verunreinigung durch Zahnzement, ermöglicht wird.

Zur Lösung schlägt die Erfindung eine Weiterbildung der eingangs genannten Kombination durch die Merkmale vor, dass jeweils in Bezug auf einen entspannten Zustand des Ringklemmabschnittes, des Implantatendabschnittes und des Kofferdammtuches, insbesondere bei axialer Projektionsbetrachtung, ein Innenumfang des Ringklemmabschnittes größer ist als ein Außenumfang des Implantatendabschnittes und gleich groß ist wie oder kleiner ist als ein äußerer Umfang, der, wenn das Kofferdamtuch in entspanntem Zustand die Implantataußenoberfläche, daran einlagig anliegend, umschließt, an der Außenseite des Kofferdamtuches resultiert. Dieser zuletzt genannte resultierende Umfang kann dem Umfang einer gedachten, geometrischen Hüllfläche entsprechen, die den Implantatendabschnitt in dessen Umfangsrichtung durchgehend in einem Abstand umschließt, welcher der Dicke des Kofferdamtuches in dessen entspanntem Zustand entspricht. Mit entspanntem Zustand ist jeweils ein von äußeren Kräften freier bzw. ein insofern unverformter Zustand gemeint. Bei dem Innenumfang des Ringklemmabschnittes kann es sich um die in einer zu einer geometrischen Ringmittelachse senkrechten Bezugsebene entlang einer um die Ringmittelachse führenden Umfangsrichtung gemessene Innenumfangslänge handeln. Bei dem Außenumfang des Implantatendabschnittes kann es sich um die in einer zu einer geometrischen Implantatlängsmittelachse senkrechten Bezugsebene entlang einer um die Implantatlängsmittelachse führenden Umfangsrichtung gemessene Außenumfangslänge handeln. Bei dem Umfang der Hüllfläche kann es sich um die in einer zu einer geometrischen Implantatlängsmittelachse senkrechten Bezugsebene entlang einer um die Implantatlängsmittelachse führenden Umfangsrichtung gemessene Umfangslänge handeln. Die vorangehend angegebene bevorzugte Weiterbildung ist unabhängig von der konkreten Querschnitts-Formgebung und lässt insofern nicht nur kreisförmig berandete Querschnitte des Implantatendabschnittes und/oder des Ringes zu. Vielmehr lässt sie zum Beispiel auch zu, dass Querschnitte des Implantatendabschnittes und/oder des Ringes mit von einer Kreisform abweichenden und ggf. sogar unrunden Konturen berandet werden. Insbesondere wenn der Innenumfang des Ringklemmabschnitts kleiner ist als der am Kofferdamtuch, das außen seitlich an dem Implantatendabschnitt anliegt, außen resultierende äußere Umfang, lässt sich eine wirksame Klemmverbindung erreichen, mittels der das Kofferdamtuch lösbar an dem Implantatendabschnitt gehalten werden kann. Die Halterung ist lösbar, da das Kofferdamtuch nach dem Entfernen des Haltemittels von dem Implantat gelöst werden kann. In Abkehr von üblichen, am Umfang offenen Kofferdam-Klammern wird ein an einem Umfang geschlossenes Haltemittel vorgeschlagen. Dies eröffnet für die Handhabung neue Möglichkeiten und ermöglicht eine besonders platzsparende und zuverlässige lösbare Halterung des Kofferdamtuchs an einem freien bzw. proximalen Längsende des Implantats. Unter dem proximalen Längsende eines als künstliche Zahnwurzel dienenden Implantats wird dasjenige Längsende des Implantats verstanden, an dem eine dentale Überkonstruktion angebracht werden kann. Dagegen handelt es sich bei dem distalen Längsende eines solchen Implantats um dasjenige Längsende, das sich nach dem Einbau an tiefster Stelle in dem Kieferknochen befindet. Ein solches Implantat kann man auch als Zahnimplantat bezeichnen. Insofern kann man im Zusammenhang mit einem Zahnimplantat eine erfindungsgemäße Kombination auch als zahnmedizinische Kombination oder als dentalmedizinische Kombination bezeichnen.

Vorzugsweise kann es sich um ein Implantat bzw. Zahnimplantat handeln, das in einem von seinem distalen Längsende ausgehenden Längenteilabschnitt ein Außengewinde aufweist. Es besteht die Möglichkeit, dass sich dieser Längenteilabschnitt mit dem Gewinde zu dem distalen Ende hin verjüngt. Der Begriff Kofferdam bzw. Kofferdamtuch ist einem Fachmann geläufig und bedarf keiner näheren Erläuterung. Häufig besitzt ein Kofferdamtuch eine Dicke in einem Bereich von 0,13 bis 0,39 mm.

Es bestehen zahlreiche Möglichkeiten zur bevorzugten Weiterbildung.

Bevorzugt ist, dass die Implantataußenoberfläche rotationssymmetrisch, insbesondere kreiszylindrisch ist. Insbesondere ist in diesem Zusammenhang bevorzugt, dass jeweils in Bezug auf einen entspannten Zustand des Ringklemmabschnittes, des Implantatendabschnittes und des Kofferdammtuches, in einer axialen Projektionsbetrachtung der Ringklemmabschnitt die Ringdurchgangsöffnung kreisrund umschließt, wobei der Innendurchmesser des Ringklemmabschnittes um eine Durchmesserdifferenz größer ist als ein Außendurchmesser der rotationssymmetrischen Implantataußenoberfläche des Implantatendabschnittes, und wobei die Dicke des Kofferdamtuches (in entspanntem Zustand) größer ist als oder gleich groß ist wie die Hälfte dieser Durchmesserdifferenz. Die genannte Projektionsbetrachtung verläuft axial, d.h. in Richtung einer geometrischen (insofern gedachten) Ringmittelachse, so dass der genannte Innendurchmesser des Ringklemmabschnittes auf den projizierten Innenrand des Ringklemmabschnittes bezogen ist. Da sich der genannte
Außendurchmesser auf die Implantataußenoberfläche bezieht, könnte man anstelle dessen auch einfach auch nur von Durchmesser sprechen.

Als zweckmäßig wird angesehen, dass, jeweils in Bezug auf einen entspannten Zustand des Ringklemmabschnittes, des Implantatendabschnittes und des Kofferdammtuches, der Ringklemmabschnitt die Ringdurchgangsöffnung in zumindest einer zu der geometrischen Ringmittelachse senkrechten Querschnittsebene kreisrund umschließt, wobei in dieser Querschnittsebene der Innendurchmesser des Ringklemmabschnittes um eine Durchmesserdifferenz größer ist als ein Außendurchmesser der rotationssymmetrischen Implantataußenoberfläche des Implantatendabschnittes, und wobei die Dicke des Kofferdamtuches (in entspanntem Zustand) größer ist als oder gleich groß ist wie die Hälfte dieser Durchmesserdifferenz.

Bei einem bevorzugten Ausführungsbeispiel ist vorgesehen, dass der Ring einen zu dem Ringklemmabschnitt benachbarten Ringschneidabschnitt aufweist, an dem eine auf einer geometrischen Kreiskontur liegende, insbesondere am Umfang geschlossene, Schneidkante ausgebildet ist, wobei der Durchmesser der Kreiskontur kleiner als der Innendurchmesser des Ringklemmabschnittes ist. Dies ermöglicht, dass der Ring des Haltemittels bei seiner Anwendung zugleich zum Auftrennen des Kofferdamtuches, insbesondere entlang einer geschlossenen Kreislinie, verwendet wird, wenn der Ring dafür weit genug auf den Implantatendabschnitt mit dem Kofferdamtuch aufgeschoben wird.

Als zweckmäßig wird angesehen, dass der Ring, insbesondere in dem Ringklemmabschnitt, eine Sollbruchstelle oder mehrere Sollbruchstellen aufweist. In diesem Zusammenhang ist bevorzugt, dass das Haltemittel einen Griff aufweist, der an dem Ringklemmabschnitt und/ oder an dem Ringschneidabschnitt befestigt, insbesondere einstückig daran angeschlossen, ist, wobei der kleinste Materialquerschnitt des Griffes größer ist als der kleinste Materialquerschnitt an der Sollbruchstelle oder an einer jeweiligen Sollbruchstelle. Dies erleichtert zu einem gewünschten Zeitpunkt die Entnahme des Haltemittels, wobei ein ungewünschtes Abreißen des Griffes von dem Ring verhindert werden kann.

Als zweckmäßig wird angesehen, dass der Ring aus elastisch verformbarem Material, bspw. aus Kunststoff, hergestellt ist und/oder dass das Kofferdamtuch aus elastisch verformbarem Material, bspw. aus Gummi, insbesondere aus Latexgummi, hergestellt ist. Es besteht die Möglichkeit, dass das Implantat im Vergleich zu dem Ring einen höheren Elastizitätsmodul und/oder eine größere Härte und/oder eine höhere Festigkeit besitzt und/oder dass der Ring im Vergleich zu dem Kofferdamtuch einen höheren Elastizitätsmodul und/ oder eine größere Härte und/oder eine höhere Festigkeit besitzt. Hinsichtlich des Ringes besteht die Möglichkeit, dass in zu der Umfangsrichtung des Ringes senkrechten Querschnitten des Ringes die Ringstärke als hälftige Differenz zwischen dem Außendurchmesser des Ringklemmabschnittes und dem Durchmesser der Kreiskontur im Vergleich zu der hierzu senkrechten Ringbreite größer oder kleiner oder gleich groß ist.

Die Erfindung betrifft auch eine Anordnung, umfassend eine Kombination, welche ein Implantat, bei dem es sich vorzugsweise um ein Zahnimplantat handelt, ein Kofferdamtuch und ein Haltemittel aufweist.

Vor dem Hintergrund des eingangs genannten Standes der Technik schlägt die Erfindung zur vorteilhaften Weiterbildung, insbesondere zur Lösung der schon eingangs genannten Aufgabe, zunächst und im Wesentlichen vor, dass es sich um eine erfindungsgemäße Kombination handelt, wobei es sich bei der Anordnung um einen zusammengesetzten Zustand des Implantats, des Kofferdamtuches und des Haltemittels handelt, wobei das Kofferdamtuch den Implantatendabschnitt außen entlang seines Umfanges umgibt und wobei der Ring das den Implantatendabschnitt umgebende Kofferdamtuch außen entlang des Umfanges umgibt und das den Implantatendabschnitt umgebende Kofferdamtuch an den Implantatendabschnitt andrückt. Insofern betrifft die Anordnung einen zusammengesetzten Zustand der zu der erfindungsgemäßen Kombination gehörenden Komponenten. Vorzugsweise handelt es sich auch in diesem Zusammenhang bei dem Implantat um ein Zahnimplantat und insofern bei der Kombination um eine zahnmedizinische Kombination.

Offenbart wird außerdem ein Haltemittel, vorzugsweise zum lösbaren Halten eines Kofferdamtuches an einem Implantat. Auch insofern handelt es sich bei dem Implantat vorzugsweise um ein Zahnimplantat in dem zuvor erläuterten Sinne. In diesem Zusammenhang könnte man daher auch von einem zahnmedizinischen oder dentalmedizinischen
Haltemittel sprechen.

Vor dem Hintergrund des eingangs beschriebenen Standes der Technik wird zur vorteilhaften Weiterbildung eines Haltemittels vorgeschlagen, dass das Haltemittel einen, insbesondere kreisrunden, Ring umfasst, der an seinem Umfang geschlossen ist und einen eine Ringdurchgangsöffnung berandenden Ringklemmabschnitt und einen zu dem Ringklemmabschnitt benachbarten Ringschneidabschnitt aufweist, und dass an dem Ringschneidabschnitt eine, insbesondere am Umfang geschlossene und insbesondere auf einer geometrischen Kreiskontur liegende, Schneidkante ausgebildet ist, wobei ein Umfang der Schneidkante kleiner als ein Innenumfang des Ringklemmabschnittes ist und wobei insbesondere der Durchmesser der Kreiskontur kleiner als ein Innendurchmesser des Ringklemmabschnittes ist. Zu möglichen Wirkungen und Vorteilen wird auf die übrige Beschreibung Bezug genommen.

Es bestehen zahlreiche Möglichkeiten zur bevorzugten Weiterbildung. Bevorzugt ist, dass der Durchmesser der Kreiskontur kleiner ist als der Innendurchmesser des Ringklemmabschnittes, wenn der Ringklemmabschnitt einen einheitlichen Innendurchmesser besitzt, oder kleiner ist als der kleinste Innendurchmesser des Ringklemmabschnittes, wenn der Ringklemmabschnitt mehrere verschiedene Innendurchmesser besitzt. Es besteht die Möglichkeit, dass der Ring, insbesondere in dem Ringklemmabschnitt, eine Sollbruchstelle oder mehrere Sollbruchstellen aufweist. Zur Vereinfachung der Handhabung ist bevorzugt, dass das Haltemittel einen Griff aufweist, der an dem Ringklemmabschnitt und/oder an dem Ringschneidabschnitt befestigt, insbesondere einstückig daran angeschlossen, ist, wobei der kleinste Materialquerschnitt des Griffes größer ist als der kleinste Materialquerschnitt an der Sollbruchstelle oder an einer jeweiligen Sollbruchstelle und man anstelle von Materialquerschnitt auch bspw. von Querschnitt oder Bauteilquerschnitt sprechen könnte. Als zweckmäßig wird angesehen, dass der Ring aus elastisch verformbarem Material, bspw. aus Kunststoff, hergestellt ist.

Die Erfindung betrifft gemäß einem weiteren Aspekt auch ein dentalmedizinisches Set, umfassend ein dentalmedizinisches Werkzeug, vorzugsweise zur lösbaren Befestigung eines Kofferdamtuches an einem Implantat mittels eines Haltemittels, und eine erfindungsgemäße Kombination. Auch in diesem Zusammenhang handelt es sich bei dem Implantat vorzugsweise um ein Zahnimplantat.

Auf den eingangs beschriebenen Stand der Technik wird auch in diesem Zusammenhang Bezug genommen. Diesem weiteren Aspekt der Erfindung liegt die Aufgabe zugrunde, ein vorteilhaftes dentalmedizinisches Set bereitzustellen. In diesem Zusammenhang wird insbesondere angestrebt, ein dentalmedizinisches Werkzeug bereitzustellen, das eine vorteilhafte Handhabung eines erfindungsgemäßen Haltemittels und einer erfindungsgemäßen dentalmedizinischen Kombination ermöglicht. Zur Lösung schlägt die Erfindung zunächst und im Wesentlichen vor, dass das dentalmedizinische Werkzeug ein Werkzeuginnenteil und ein Werkzeugaußenteil umfasst, dass das Werkzeuginnenteil aufweist:
- eine Stirnfläche,
- einen an seiner Außenseite rotationssymmetrischen, insbesondere kreiszylindrischen, Aufsteckabschnitt,
   wobei der Aufsteckabschnitt insbesondere an die Stirnfläche angrenzt,
- und ein erstes Außengewinde;
und dass das Werkzeugaußenteil aufweist:
- eine Hülse, die ein distales Hülsenlängsende, das insbesondere eine distale Hülsenstirnfläche ausbildet, aufweist, und
- ein an der Hülse innenseitig ausgebildetes, zu dem ersten Außengewinde passendes Hülseninnengewinde. Es wird vorgeschlagen, dass der axiale Abstand zwischen der Stirnfläche des Werkzeuginnenteils und dem distalen Längsende des
   ersten Außengewindes, die Länge des Außengewindes, ein axialer Abstand zwischen dem distalen Hülsenlängsende und dem proximalen Längsende des Hülseninnengewindes sowie die Länge des Hülseninnengewindes so aufeinander abgestimmt sind, dass das Werkzeugaußenteil, ausgehend von einer ersten, relativ zu dem Werkzeuginnenteil gegebenen Position mittels Drehung des Werkzeugaußenteils relativ zu dem Werkzeuginnenteil zufolge des Gewindeeingriffes zwischen dem ersten Außengewinde und dem Hülseninnengewinde relativ zu dem Werkzeuginnenteil so weit in distaler Richtung bewegbar ist, dass dabei eine Bewegung des distalen Hülsenlängsendes zumindest entlang eines Längenteilabschnittes des Aufsteckabschnittes resultiert, insbesondere bis zu der Stirnfläche des Werkzeuginnenteils und insbesondere bis über die Stirnfläche des Werkzeuginnenteils hinaus. Unter einem axialen Abstand wird ein Abstand in einer zu einer geometrischen Werkzeuglängsmittelachse parallelen Richtung verstanden. Des Weiteren wird vorgeschlagen, dass das Werkzeuginnenteil einen sich zentral in distaler Richtung über die Stirnfläche hinaus erstreckenden Vorsprung aufweist, an dem ein zweites Außengewinde ausgebildet ist, wobei das zweite Außengewinde im Vergleich zu dem ersten Außengewinde einen kleineren Gewindedurchmesser besitzt,
   dass es sich bei der Kombination um eine erfindungsgemäße Kombination handelt, dass das Implantat an dem Implantatendabschnitt eine an seinem proximalen Ende offene Ausnehmung mit einem darin ausgebildeten Innengewinde aufweist und dass dieses Innengewinde zu dem an dem Vorsprung ausgebildeten zweiten Außengewinde des Werkzeuginnenteils passt.

Betreffend das dentalmedizinische Werkzeug wird unter der proximalen Richtung oder Seite die bei der Anwendung zu dem Anwender, wie einem Zahnarzt, hin weisende (d.h. die von dem Implantat weg weisende) Richtung oder Seite verstanden, während der Begriff distale Richtung oder Seite die dazu entgegengesetzte Richtung bzw. Seite meint. Das von der Erfindung in diesem Zusammenhang vorgeschlagene Werkzeug ermöglicht eine zuverlässige und einfache Applikation eines erfindungsgemäßen Haltemittels an einem mit Kofferdamtuch abgedeckten Implantatendabschnitt eines Implantats, bei dem es sich vorzugsweise um ein Zahnimplantat handelt.

Gemäß einem weiteren Aspekt wird ein dentalmedizinisches Werkzeug offenbart, zu dessen vorteilhafter Ausgestaltung vorgeschlagen wird, dass das Werkzeug ein Werkzeuginnenteil und ein Werkzeugaußenteil umfasst, dass das Werkzeuginnenteil aufweist:
- eine Stirnfläche, 9
- einen Werkzeuginnenteil-Längenabschnitt, der an seiner Außenseite insbesondere rotationssymmetrisch, insbesondere kreiszylindrisch, ausgebildet ist, wobei der Werkzeuginnenteil-Längenabschnitt insbesondere an die Stirnfläche angrenzt,
- und ein erstes Außengewinde;
und dass das Werkzeugaußenteil aufweist:
- eine Hülse, die ein distales Hülsenlängsende, das insbesondere eine distale Hülsenstirnfläche ausbildet, aufweist, und
- ein an der Hülse innenseitig ausgebildetes, zu dem ersten Außengewinde passendes Hülseninnengewinde.

Bevorzugt (d.h. aber nicht notwendig) ist, dass der axiale Abstand zwischen der Stirnfläche des Werkzeuginnenteils und dem distalen Längsende des ersten Außengewindes, die Länge des Außengewindes, ein axialer Abstand zwischen dem distalen Hülsenlängsende und dem proximalen Längsende des Hülseninnengewindes sowie die Länge des Hülseninnengewindes so aufeinander abgestimmt sind, dass das Werkzeugaußenteil, ausgehend von einer ersten, relativ zu dem Werkzeuginnenteil gegebenen Position mittels Drehung des Werkzeugaußenteils relativ zu dem Werkzeuginnenteil zufolge des Gewindeeingriffes zwischen dem ersten Außengewinde und dem Hülseninnengewinde relativ zu dem Werkzeuginnenteil so weit in distaler Richtung bewegbar ist, dass dabei eine Bewegung des distalen Hülsenlängsendes zumindest entlang eines Längenteilabschnittes des Werkzeuginnenteil-Längenabschnittes resultiert, insbesondere bis zu der Stirnfläche des Werkzeuginnenteils und insbesondere bis über die Stirnfläche des Werkzeuginnenteils hinaus. Bei dem Werkzeuginnenteil-Längenabschnitt handelt es sich um einen Teilabschnitt des Werkzeuginnenteils. Vorzugsweise erstreckt sich der Werkzeuginnenteil-Längenabschnitt zwischen dem ersten Außengewinde und der genannten Stirnfläche des Werkzeuginnenteils. Der Werkzeuginnenteil-Längenabschnitt kann je nach Anforderungen auf unterschiedliche Weise ausgebildet sein, wobei eine Ausführung als Aufsteckabschnitt möglich aber nicht notwendig ist.

Betreffend das dentalmedizinische Werkzeug des erfindungsgemäßen zahnmedizinischen Sets bestehen zahlreiche Möglichkeiten zur bevorzugten Weiterbildung. So ist bevorzugt, dass das Werkzeuginnenteil einen sich zentral in distaler Richtung über die Stirnfläche hinaus erstreckenden Vorsprung aufweist, an dem ein zweites Außengewinde ausgebildet ist, wobei das zweite Außengewinde im Vergleich zu dem ersten Außengewinde einen kleineren Gewindedurchmesser besitzt. Das zweite Außengewinde kann zum Anschrauben des Werkzeuges an einem bereits im Kieferknochen eingesetzten Implants dienen. Bevorzugt ist, dass der Vorsprung eine distale, insbesondere eine Schneidkante oder mehrere Schneidkanten aufweisende, Spitze umfasst. Dies ermöglicht, dass zum Aufschrauben des Werkzeuges an dem Implantat das Durchdringen bzw. das Auftrennen des das Implantat bedeckenden Kofferdamtuches. Bevorzugt ist, dass das Werkzeugaußenteil einen ersten Anschlag ausbildet, dass das Werkzeuginnenteil einen zweiten Anschlag ausbildet und dass bei einer Bewegung des Werkzeugaußenteils in distaler Richtung relativ zu dem Werkzeuginnenteil in einer bestimmten axialen Relativlage der erste Anschlag mit dem zweiten Anschlag einen in axialer Richtung wirksamen Formschluss bewirkt, der eine weitere distale Bewegung des Werkzeugaußenteils relativ zu dem Werkzeuginnenteil verhindert.

Betreffend das dentalmedizinische Werkzeug des erfindungsgemäßen dentalmedizinischen Sets ist bevorzugt, dass die Hülse an dem distalen Hülsenlängsende oder benachbart zu dem distalen Hülsenlängsende eine nach innen weisende Oberfläche aufweist, die in einer zu einer Werkzeuglängsmittelachse des Werkzeuges senkrechten Querschnittsebene eine Innenkontur bildet, wobei die Innenkontur entlang eines um die Werkzeuglängsmittelachse führenden Umfangs von der Werkzeuglängsmittelachse einen einheitlichen radialen Abstand oder einen veränderlichen radialen Abstand besitzt, dass der Aufsteckabschnitt in einer zu einer Werkzeuglängsmittelachse senkrechten Querschnittsebene mit einer äußeren Oberfläche eine Außenkontur bildet, wobei die Außenkontur entlang eines um die Werkzeuglängsmittelachse führenden Umfangs von der Werkzeuglängsmittelachse einen einheitlichen radialen Abstand oder einen veränderlichen radialen Abstand besitzt, und dass das Verhältnis des einheitlichen radialen Abstands der Innenkontur zu dem einheitlichen radialen Abstand der Außenkontur oder das Verhältnis des kleinsten radialen Abstands der Innenkontur zu dem größten radialen Abstand der Außenkontur größer ist als der Wert 1 und insbesondere in einem Wertebereich von 1,1 bis 2 liegt.

Es besteht die Möglichkeit, dass das Werkzeuginnenteil angrenzend an oder benachbart zu einem von der Stirnfläche entfernten axialen Längsende des Aufsteckabschnitts eine ringförmig verlaufende, insbesondere zu der Werkzeuglängsmittelachse senkrechte, Oberfläche aufweist. Diese Oberfläche kann zum Beispiel als Anlage für einen Aufsteckadapter dienen. In diesem Zusammenhang ist bevorzugt, dass das dentalmedizinische Werkzeug einen ringförmigen, ein- oder mehrteilig ausgebildeten Aufsteckadapter zum Aufstecken auf den Aufsteckabschnitt umfasst, wobei der Aufsteckadaptereine Ringinnenkontur aufweist, die zur Erzielung einer in Radialrichtung spielfreien oder in Radialrichtung spielarmen Steckverbindung in der Form und/oder in den Abmessungen an eine Außenkontur des Aufsteckabschnitts angepasst ist.

Es besteht die Möglichkeit, dass das Werkzeug einen Schneidaufsatz umfasst, dass der Schneidaufsatz einen ringförmigen Grundkörper aufweist, der an der Hülse, insbesondere an ihrem distalen Hülsenlängsende, lösbar angebracht oder lösbar anbringbar ist, und dass der Schneidaufsatz eine oder mehrere Schneiden aufweist. Als zweckmäßige Weiterbildung wird angesehen, dass der Grundkörper einen Zentrierabschnitt umfasst, wobei der Zentrierabschnitt entweder einen Außendurchmesser aufweist, der zur Erzielung einer, insbesondere eine Klemmung bewirkenden, Zentrierung an einen Innendurchmesser der Hülse angepasst ist, oder einen Innendurchmesser aufweist, der zur Erzielung einer, insbesondere eine Klemmung bewirkenden, Zentrierung an einen Außendurchmesser der Hülse angepasst ist.

Eine bevorzugte Weiterbildung wird auch darin gesehen, dass der Grundkörper erste Mittel und die Hülse zweite Mittel aufweist, wobei die ersten Mittel und die zweiten Mittel daran angepasst sind, in einem an der Hülse angebrachten Zustand des Schneidaufsatzes einen Drehformschluss des Schneidaufsatzes relativ zu der Hülse bezüglich einer um eine Werkzeuglängsmittelachse führenden Umfangsrichtung zu bewirken. Eine zweckmäßige Ausgestaltung wird darin gesehen, dass entweder die zweiten Mittel zumindest eine Ausnehmung an der Hülse umfassen und die ersten Mittel zumindest einen von dem Schneidaufsatz abstehenden Vorsprung umfassen oder die zweiten Mittel zumindest einen von der Hülse abstehenden Vorsprung und die ersten Mittel zumindest eine an dem Schneidaufsatz ausgebildete Ausnehmung umfassen, und dass in einem an der Hülse angebrachten Zustand des Schneidaufsatzes der Vorsprung in die Ausnehmung eingreift unter Bildung einer gegenseitigen Anlage, die eine Relativbewegung zueinander in Umfangsrichtung verhindert.

Hinsichtlich der Schneide besteht zum Beispiel die Möglichkeit, dass die Schneide entlang einer Kreiskontur, insbesondere entlang des gesamten Umfangs der Kreiskontur, ausgebildet ist. Alternativ oder kombinativ besteht die Möglichkeit, dass der Schneidaufsatz einen Skalpellvorsprung oder mehrere Skalpellvorsprünge aufweist, wobei an dem Skalpellvorsprung die Schneide ausgebildet ist oder wobei an einem jeweiligen Skalpellvorsprung eine jeweilige Schneide ausgebildet ist.

Als Alternative zu einem von dem übrigen Werkzeug lösbaren Schneidaufsatz besteht die Möglichkeit, dass an dem distalen Hülsenlängsende, insbesondere einstückig, ein Skalpellvorsprung oder mehrere Skalpellvorsprünge ausgebildet ist oder sind, wobei an dem Skalpellvorsprung eine Schneide ausgebildet ist oder wobei an einem jeweiligen Skalpellvorsprung eine jeweilige Schneide ausgebildet ist. Bevorzugt ist, dass der axiale Abstand zwischen der Stirnfläche des Werkzeuginnenteils und dem distalen Längsende des ersten Außengewindes, die Länge des Außengewindes, ein axialer Abstand zwischen dem distalen Hülsenlängsende und dem proximalen Längsende des Hülseninnengewindes sowie die Länge des Hülseninnengewindes so aufeinander abgestimmt sind, dass das Werkzeugaußenteil, ausgehend von einer relativ zu dem Werkzeuginnenteil gegebenen Position mittels Drehung des Werkzeugaußenteils relativ zu dem Werkzeuginnenteil zufolge des Gewindeeingriffes zwischen dem ersten Außengewinde und dem Hülseninnengewinde relativ zu dem Werkzeuginnenteil so weit in distaler Richtung bewegbar ist, dass dabei eine Bewegung der Schneide oder der Schneiden zumindest entlang eines Längenteilabschnittes des Aufsteckabschnittes resultiert, insbesondere bis zu der Stirnfläche des Werkzeuginnenteils und insbesondere bis über die Stirnfläche des Werkzeuginnenteils hinaus. Wenn sich die Schneide oder die Schneiden an einem von dem übrigen Werkzeug abnehmbaren Schneidaufsatz befinden, bezieht sich dies auf einen Zustand, bei dem der Schneidaufsatz an dem übrigen Werkzeug angebracht ist.

Offenbart wird auch ein dentalmedizinisches Set, umfassend ein dentalmedizinisches Werkzeug und ein Haltemittel.

Vor dem Hintergrund des schon beschriebenen Standes der Technik wird zur Bereitstellung eines vorteilhaften dentalmedizinischen Sets vorgeschlagen, dass das dentalmedizinische Werkzeug einzelne oder mehrere der vorangehend beschriebenen Merkmale aufweist, dass das Haltemittel einzelne oder mehrere der vorangehend beschriebenen Merkmale aufweist und dass ein Innendurchmesser des Ringes, insbesondere ein Durchmesser der geometrischen Kreiskontur der Schneidkante des Ringschneidabschnittes oder ein Innendurchmesser des Ringklemmabschnittes, und ein Außendurchmesser des Aufsteckabschnittes zur gemeinsamen Erzielung einer spielarmen oder spielfreien Führung, insbesondere zur Erzielung einer Übergangspassung oder einer Klemm-Steckverbindung, aufeinander abgestimmt sind. Vorzugsweise ist ein Innendurchmesser des distalen Hülsenlängsendes größer als oder gleich groß wie ein Außendurchmesser des Aufsteckabschnittes und kleiner als ein Außendurchmesser des Ringes. Zu möglichen Wirkungen und Vorteilen wird auf die übrige Beschreibung Bezug genommen.

Offenbart wird auch ein dentalmedizinisches Set, umfassend ein dentalmedizinisches Werkzeug und ein Implantat, wobei das Implantat einen Implantatendabschnitt umfasst, der eine Implantataußenoberfläche, die insbesondere rotationssymmetrisch, insbesondere kreiszylindrisch, gestaltet ist, aufweist.

Zur vorteilhaften Weiterbildung wird vorgeschlagen, dass es sich bei dem dentalmedizinischen Werkzeug um ein dentalmedizinisches Werkzeug handelt, das einzelne oder mehrere der zuvor beschriebenen Merkmale aufweist. Bevorzugt ist, dass das Implantat an dem Implantatendabschnitt eine an seinem proximalen Ende offene Ausnehmung mit einem darin ausgebildeten Innengewinde aufweist und dass dieses Innengewinde zu dem an dem Vorsprung ausgebildeten zweiten Außengewinde des Werkzeuginnenteils passt.

Es bestehen zahlreiche Möglichkeiten zur bevorzugten Weiterbildung. Es besteht die Möglichkeit, dass dass der Gewindeeingriff zwischen dem ersten Außengewinde und dem Hülseninnengewinde einen größeren Leerlauf-Drehwiderstand hat als ein Gewindeeingriff zwischen dem zweiten Außengewinde und dem Innengewinde des Implantatendabschnittes. Der Begriff Leerlauf-Drehwiderstand bezeichnet das nur zum Ein- oder Ausschrauben benötigte Drehmoment, wenn keine sonstigen äußeren Lasten einwirken. Bevorzugt ist, dass der stirnseitige Außendurchmesser des Aufsteckabschnittes dem stirnseitigen Außendurchmesser des Implantatendabschnittes entspricht. Dies vereinfacht das Verschieben des Ringes von dem Aufsteckabschnitt auf einen Implantatendabschnitt.

Wenn das Werkzeug einen Aufsteckadapter aufweist, ist bevorzugt, dass der Aufsteckadapter eine zylindrische Außenoberfläche aufweist, deren Durchmesser einem Außendurchmesser der Implantataußenoberfläche an dem Implantatendabschnitt entspricht.

Bevorzugt ist auch, dass entweder die Schneide oder die Schneiden des Schneidaufsatzes entlang einer geometrischen Kreislinie verläuft oder verlaufen oder die Schneide oder die Schneiden entlang eine geometrische Kreislinie schneiden, wobei jeweils der Durchmesser der Kreislinie dem Außendurchmesser der Implantataußenoberfläche des Implantatendabschnittes entspricht oder im Vergleich dazu größer oder kleiner ist.

### Kurze Beschreibung der Zeichnungen

Die Erfindungen und weitere offenbarte Gegenstände werden nachfolgend mit Bezug auf die beigefügten Figuren beschrieben, welche bevorzugte Ausführungsbeispiele zeigen. Im Einzelnen zeigt:
- Fig. 1: perspektivisch, teilweise geschnitten, ein bevorzugtes Ausführungsbeispiel einer erfindungsgemäßen Kombination, welche ein erfindungsgemäßes Haltemittel umfasst, und ein bevorzugtes Ausführungsbeispiel eines erfindungsgemäßen dentalmedizinischen Werkzeugs und eines erfindungsgemäßen dentalmedizinischen Sets, jeweils gemäß einem bevorzugten Ausführungsbeispiel;
- Fig. 1a: perspektivisch eine Kombination, umfassend das in Fig. 1 gezeigte Implantat, Kofferdamtuch und Haltemittel;
- Fig. 2: perspektivisch das in Fig. 1 gezeigte erfindungsgemäße Haltemittel, demgegenüber in Vergrößerung;
- Fig. 3: eine Schnittansicht entlang Schnittebene III-III;
- Fig. 4: jeweils halbseitig in einer Seitenansicht und in einer Schnittansicht das in Fig. 1 gezeigte dentalmedizinische Werkzeug, demgegenüber vergrößert;
- Fig. 5: perspektivisch das in Fig. 4 gezeigte dentalmedizinische Werkzeug, durch ein gestrichelt dargestelltes Ausführungsbeispiel eines erfindungsgemäßen Haltemittels zu einem dentalmedizinischen Set ergänzt;
- Fig. 6: die in Fig. 5 gezeigten Komponenten, jedoch in einer teilweise geschnittenen Seitenansicht,
- Fig. 7: in einer im Vergleich zu Fig. 1 vergrößerten Schnittansicht das in Fig. 1 abschnittsweise gezeigte Implantat, eingesetzt in einen Kieferknochen,
- Fig. 8: exemplarisch einen bevorzugten Gebrauchszustand der erfindungsgemäßen Kombination, bei der, ausgehend von der in Fig. 7 gezeigten Situation, das Implantat und der daran angrenzende Bereich mittels des Kofferdamtuches abgedeckt wurden;
- Fig. 9: exemplarisch einen bevorzugten Gebrauchszustand, bei welchem ausgehend von der in Fig. 8 gezeigten Situation, das in den vorangehenden Figuren gezeigte dentalmedizinische Werkzeug mit dem daran aufgesteckten, in vorangehenden Figuren gezeigten erfindungsgemäßen Haltemittel in das Implantat eingeschraubt wurde;
- Fig. 9a: eine Ausschnittsvergrößerung von Detail IXa gemäß Fig. 9;
- Fig. 10: exemplarisch einen bevorzugten Gebrauchszustand, bei welchem, ausgehend von der in Fig. 9 gezeigten Situation, der Ring des Haltemittels teilweise von dem dentalmedizinischen Werkzeug abgestreift und um das Kofferdamtuch auf das Implantat aufgeschoben wurde;
- Fig. 11: exemplarisch einen bevorzugten Gebrauchszustand, bei dem, ausgehend von Fig. 10, der Ring des Haltemittels so weit auf das Implantat mit dem Kofferdamtuch aufgeschoben wurde, dass das Kofferdamtuch mittels der kreisförmigen Schneidkante des Haltemittels zerschnitten wurde;
- Fig. 11a: eine Ausschnittsvergrößerung gemäß Detail XIa aus Fig. 11;
- Fig. 12: exemplarisch einen weiteren bevorzugten Gebrauchszustand, bei welchem, ausgehend von der in Fig. 11 gezeigten Situation, das dentalmedizinische Werkzeug und ein aus dem Kofferdamtuch ausgeschnittener Kofferdamtuchabschnitt von dem Implantat entfernt wurden;
- Fig. 13: exemplarisch einen weiteren bevorzugten Gebrauchszustand, bei welchem, ausgehend von der in Fig. 12 gezeigten Situation, auf das Implantat ein hülsenartiger Aufbau aufgesetzt und mit dem Implantat verschraubt wurde;
- Fig. 14: exemplarisch einen weiteren bevorzugten Gebrauchszustand, bei welchem, ausgehend von der in Fig. 13 gezeigten Situation, eine Krone mittels Zement auf dem Implantat und dem Aufbau festgeklebt wurde;
- Fig. 15: exemplarisch einen weiteren bevorzugten Gebrauchszustand, bei welchem, ausgehend von der in Fig. 14 gezeigten Situation, das Haltemittel entfernt wurde;
- Fig. 16: exemplarisch einen weiteren bevorzugten Gebrauchszustand, bei welchem, ausgehend von der in Fig. 15 gezeigten Situation, das das Implantat umgebende Kofferdamtuch und ein aus der Klebefuge überstehender Zementüberschuss entfernt wurden und eine Heilung erfolgt ist,
- Fig. 17: perspektivisch ein erfindungsgemäßes dentalmedizinisches Werkzeug gemäß einem weiteren bevorzugten Ausführungsbeispiel, welches einen Aufsteckadapter und zwei Schneidaufsätze umfasst;
- Fig. 18: perspektivisch den in Fig. 17 gezeigten Aufsteckadapter, demgegenüber in Vergrößerung;
- Fig. 19: eine Schnittansicht entlang Schnittebene XIX-XIX aus Fig. 18;
- Fig. 20: jeweilig halbseitig in einer Seitenansicht und in einer Schnittansicht das in Fig. 17 gezeigte dentalmedizinische Werkzeug bei aufgestecktem Aufsteckadapter und in einem bevorzugten Gebrauchszustand in Verbindung mit einem Implantat, einem Kofferdamtuch und einem Haltemittel;
- Fig. 21: in einer teilweise geschnittenen Ansicht einen Kieferbereich, in den ein Implantat eingesetzt ist, wobei und in dem Implantat eine Heilungskappe eingeschraubt ist;
- Fig. 22: eine perspektivische Draufsicht auf den in Fig. 21 gezeigten Kieferbereich, nach dem Abnehmen der Heilungskappe;
- Fig. 23: jeweils halbseitig in einer Seitenansicht und in einer Schnittansicht das in Fig. 23 gezeigte dentalmedizinische Werkzeug, wobei an dessen Werkzeugaußenteil ein Schneidaufsatz mit kreisförmiger Schneide angebracht ist, exemplarisch in einem bevorzugten Gebrauchszustand;
- Fig. 24: exemplarisch einen bevorzugten Gebrauchszustand, der dem in Fig. 23 gezeigten Gebrauchszustand folgt;
- Fig. 25: perspektivisch den in den Fig. 23, 24 mit dargestellten Schneidaufsatz,
- Fig. 26: eine Schnittansicht entlang Schnittebene XXVI-XXVI gemäß Fig. 25;
- Fig. 27: in einer teilweise geschnittenen Ansicht einen Kieferbereich, in den ein Implantat ohne eine Heilungskappe eingesetzt ist;
- Fig. 28: jeweils halbseitig in einer Seitenansicht und in einer Schnittansicht das in Fig. 17 gezeigte dentalmedizinische Werkzeug, wobei an dessen Werkzeugaußenteil ein Schneidaufsatz mit zwei Skalpellen angebracht ist, exemplarisch in einem bevorzugten Gebrauchszustand;
- Fig. 29: einen exemplarisch bevorzugten Gebrauchszustand, der dem in Fig. 28 gezeigten Gebrauchszustand folgt;
- Fig. 30: perspektivisch den in den Fig. 28, 29 mit dargestellten Schneidaufsatz;
- Fig. 31: eine Schnittansicht entlang Schnittebene XXXI-XXXI gemäß Fig. 30;
- Fig. 32: perspektivisch ein erfindungsgemäßes dentalmedizinisches Werkzeug gemäß einem weiteren bevorzugten Ausführungsbeispiel mit in dem Beispiel einstückig an dem Werkzeugaußenteil ausgebildeten Skalpellen;
- Fig. 33: jeweils halbseitig in einer Seitenansicht und in einer Schnittansicht das in Fig. 32 gezeigte dentalmedizinische Werkzeug, in einem bevorzugten Gebrauchszustand und
- Fig. 34: einen bevorzugten Gebrauchszustand, der dem in Fig. 33 gezeigten Gebrauchszustand nachfolgt.

### Beschreibung der Ausführungsformen

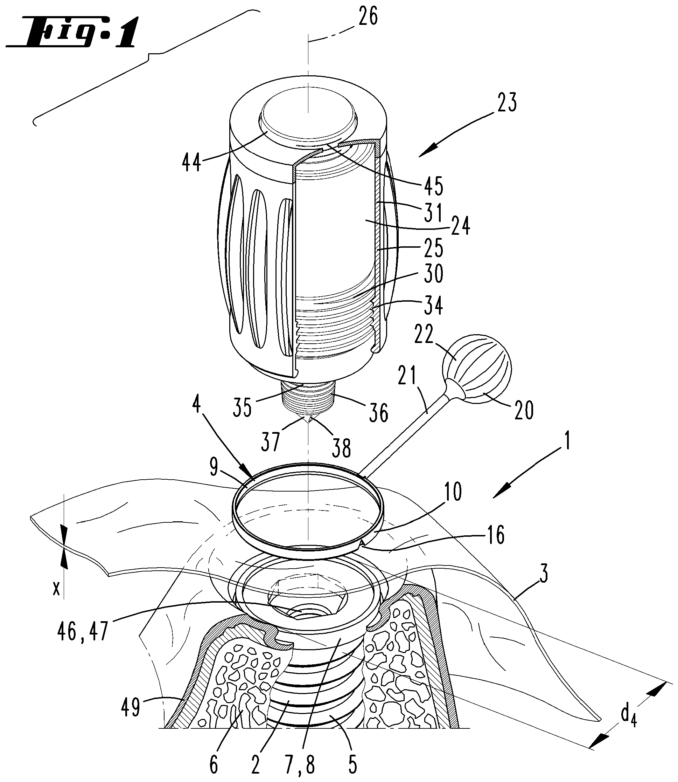

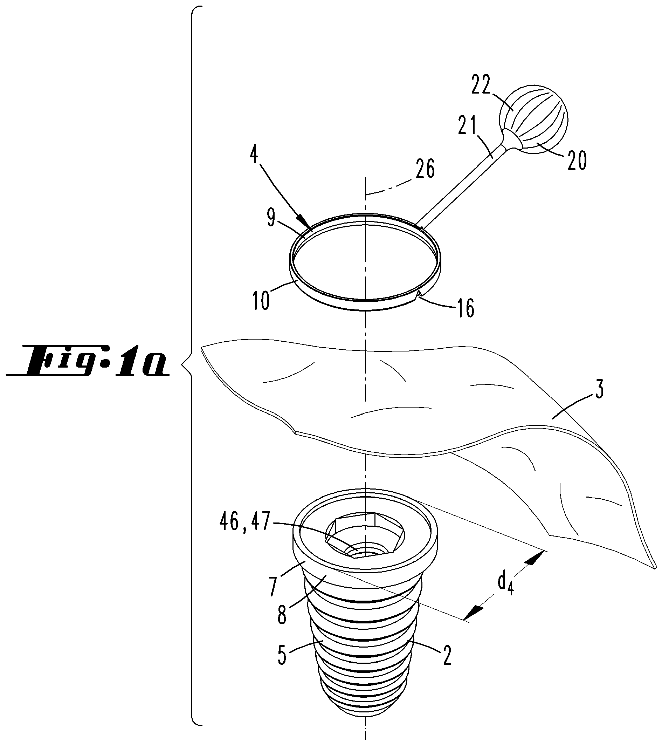

Mit Bezug auf die Figuren 1 - 3 wird zunächst eine erfindungsgemäße Kombination 1 gemäß einem bevorzugten Ausführungsbeispiel beschrieben. Diese umfasst ein Implantat 2, ein Kofferdamtuch 3 und ein Haltemittel 4. Fig. 1 zeigt zusätzlich ein Ausführungsbeispiel eines erfindungsgemäßen dentalmedizinischen Werkzeuges 23, welches noch mit Bezug auf weitere Figuren erläutert wird. Das Implantat 2, bei dem es sich um ein Zahnimplantat handelt, umfasst einen Außengewinde tragenden Gewindeabschnitt 5, der in dem in Fig. 1 gezeigten Anwendungsbeispiel in einen Kieferknochen 6 eingeschraubt wurde, und einen dazu axial benachbarten Implantatendabschnitt 7, dessen nach außen weisende Implantataußenoberfläche 8 kreiszylindrisch geformt ist. Das Haltemittel 4 dient zum lösbaren Halten bzw. zur zeitweisen Fixierung des Kofferdamtuches 3 an dem Implantatendabschnitt 7, um insbesondere die seitlich außen an den Implantatendabschnitt 7 angrenzende Umgebung während einer späteren Montage eines Aufbaues und einer Krone abzudecken. Dadurch soll verhindert werden, dass bei der Montage der Krone ungewollt gewisse Mengen des dabei verwendeten Zements in Kontakt mit dem Knochen oder Zahnfleisch kommen können.

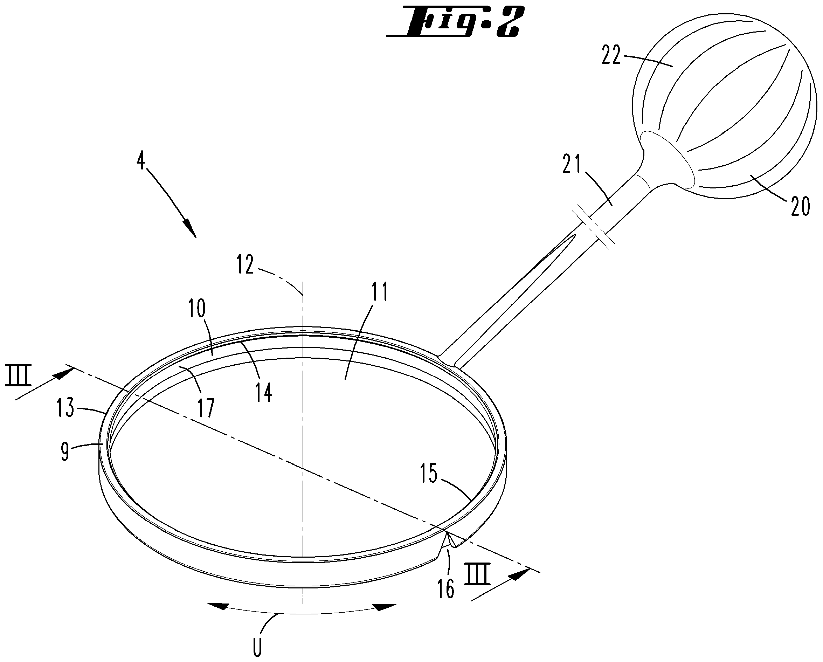

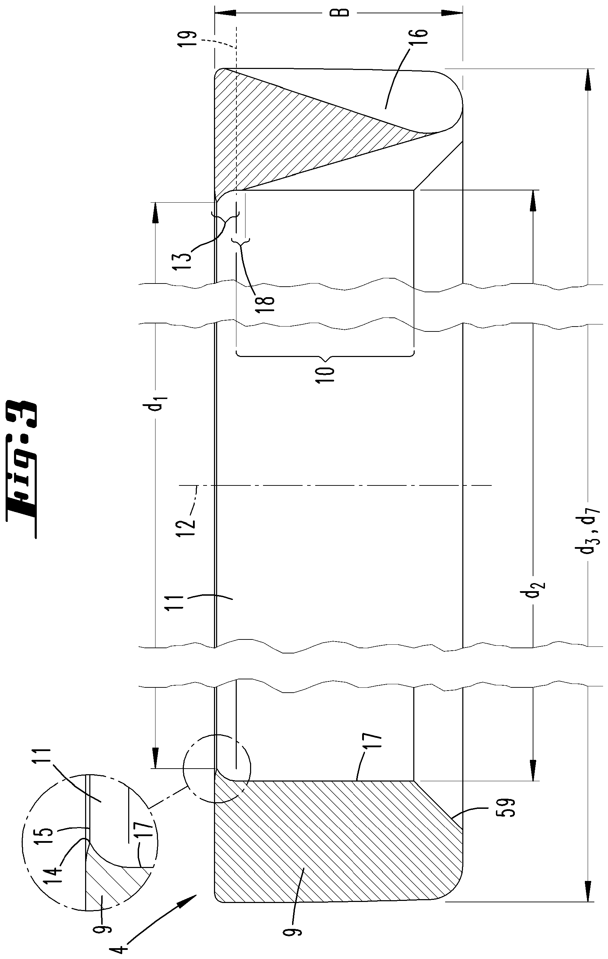

Das Haltemittel 4 umfasst einen kreisrunden Ring 9, der an seinem Umfang geschlossen ist. Mit 11 ist eine von dem Ring 9 umschlossene Ringdurchgangsöffnung und mit 12 eine geometrische Ringmittelachse bezeichnet. Der Ring 9 umfasst einen Ringklemmabschnitt 10 und einen sich hieran an dem einen Längsende axial, d.h. in zu der Ringmittelachse 12 paralleler Richtung, einstückig anschließenden Ringschneidabschnitt 13. An dem anderen Längsende schließt sich ein Ringabschnitt an, der eine innenliegende Fase 59 aufweist und sich dadurch zu seinem freien Längsende verjüngt. An dem Ringschneidabschnitt 13 ist eine nach radial innen weisende, auf einer geometrischen Kreiskontur 14 liegende, am Umfang geschlossene Schneidkante 15 ausgebildet. Der Durchmesser d₁ der Kreiskontur 14 ist kleiner als der Innendurchmesser d₂ des Ringklemmabschnittes. In dem Beispiel weist der Ringklemmabschnitt 10 eine Sollbruchstelle 16 auf. Diese ist als Kerbe ausgebildet, in deren Bereich der Ringklemmabschnitt 10 in einem Teilabschnitt eine geringere Wandstärke besitzt. Angesichts der am Umfang nur lokal ausgebildeten Sollbruchstelle 16 kann dem Verlauf der im Beispiel im Übrigen kreiszylindrischen Innenoberfläche 17 des Ringklemmabschnittes 10 gleichwohl der Innendurchmesser d₂ zugeordnet werden. In dem Beispiel erstreckt sich die Kerbe der Sollbruchstelle 16 nicht über die gesamte axiale Ausdehnung des Ringklemmabschnittes 10. In einem axial an den Ringschneidabschnitt 13 angrenzenden Bereich 18 des Ringklemmabschnittes 10, d.h. auch in der in Fig. 3 exemplarisch gewählten, zu der Ringmittelachse 12 senkrechten Querschnittsebene 19, umschließt der Ringklemmabschnitt 10 die Ringdurchgangsöffnung durchgehend kreisrund, also durchgehend entlang eines Kreises, dessen Durchmesser dem Innendurchmesser d₂ entspricht. Das Haltemittel 4 umfasst zu Handhabungszwecken einen Griff 20. Dieser weist einen einstückig an die Außenseite des Ringes 9 angeschlossenen und in Fig. 2 mittels Dopellinie schematisch verkürzt dargestellten Griffsteg 21 und ein an dessen anderes Längsende anschließendes Griffende 22 auf. Der Griff 20 ist bzgl. der Umfangsrichtung U des Ringes 9 beabstandet von der Sollbruchstelle 16 an den Ring 9 angeformt. Der kleinste Materialquerschnitt des Griffes 9, d.h. in dem Beispiel der Querschnitt des Griffsteges 21, ist erkennbar größer als der kleinste Materialquerschnitt des Ringes 9 an der Sollbruchstelle 16. In dem Beispiel ist das Haltemittel 4 aus Gummi hergestellt. Fig. 3 verdeutlicht, dass in dem Beispiel in zu der Umfangsrichtung U des Ringes 9 senkrechten Querschnitten die Ringbreite B als Abmessung des Ringes in zu der Ringmittelachse 12 paralleler Richtung größer ist als die Ringstärke, als welche hier die hälftige Differenz zwischen dem Außendurchmesser d₃ des Ringes 9 und dem Durchmessser d₁ betrachtet wird.

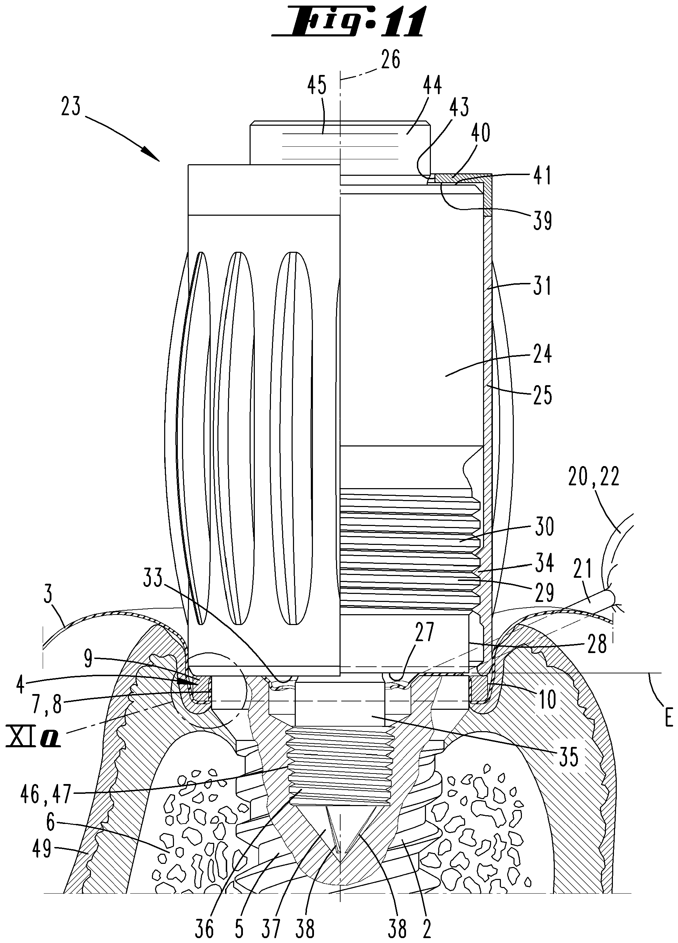

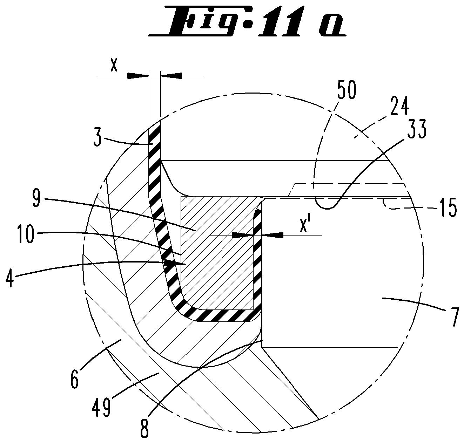

In Fig. 1a ist der Durchmesser, welcher der kreiszylindrischen Implantataußenoberfläche 8 des Implantatendabschnittes 7 zugeordnet ist, mit d₄ angegeben und wird nachfolgend auch als Außendurchmesser d₄ bezeichnet. Der Innendurchmesser d₂ des Ringklemmabschnittes 10 und speziell des dortigen Abschnittes 18 ist um eine Durchmesserdifferenz größer als der Außendurchmesser d₄, so dass sich der Ringklemmabschnitt 10 auf den Implantatendabschnitt 7 mit einem gewissen seitlichen Spiel aufsetzen ließe. Andererseits ist die Dicke des Kofferdamtuches 3 (bezogen auf dessen entspannten bzw. unverformten Zustand) in dem Beispiel größer als die Hälfte dieser vorgenannten Durchmesserdifferenz. Daraus folgt, dass bei einer axialen, d.h. parallel zu der Ringmittelachse 12 orientierten, Projektionsbetrachtung der Innenumfang des Ringklemmabschnittes 10 größer ist als der Außenumfang des Implantatendabschnittes 7, wobei dabei der Innenumfang jedoch kleiner ist als ein äußerer Umfang, der, wenn das Kofferdamtuch 3 entspannt die Implantataußenoberfläche 8 des Implantatendabschnittes 7, daran einlagig anliegend, am Umfang umschließt, an der Außenseite des Kofferdamtuches 3 resultiert. Die Figuren 11, 11a zeigen eine Situation, bei welcher das Kofferdamtuch 3 die Implantataußenoberfäche 8 des Implantatendabschnittes 7, daran einlagig anliegend entlang des Umfanges umschließt, wobei dieser anliegende Bereich des Kofferdamtuches 3 mittels des Ringklemmabschnittes 10 von außen gegen die Implantataußenoberfläche 8 angedrückt wird. Aufgrund der vorangehend beschriebenen Beziehungen zwischen den Umfängen (bzw. Umfangslängen) wird das Kofferdamtuch zwischen dem Implantatendabschnitt 7 und dem Ringklemmabschnitt 10 gestaucht, so dass seine Dicke x' in diesem nicht entspannten Zustand geringer ist als die Dicke x des Kofferdamtuches 3 in entspanntem bzw. unverformten Zustand. Zufolge der beschriebenen geometrischen Beziehungen wird das Kofferdamtuch 3 mittels des Ringklemmabschnittes 10 von außen gegen die Implantatoberfläche 8 des Implantatendabschnittes 7 am Umfang geschlossen dichtend angedrückt werden, wobei zufolge der elastischen Dickenstauchung des Kofferdamtuches 3 eine gewünschte Klemmwirkung resultiert. In dem Beispiel (also nicht notwendig) ist das Kofferdamtuch 3 aus Kunststoff, welcher eine im Vergleich zu dem Gummi höhere Festigkeit aufweist, hergestellt. Das Implantat 2 ist im Bespiel aus Metall (vorzugsweise Titan) hergestellt, welches eine im Vergleich zu dem Kunststoff höhere Festigkeit aufweist. Aus dem Vorangehenden versteht sich, dass die bzgl. des Innenumfanges des Ringklemmabschnittes 10, des Außenumfangs des Implantatendabschnittes 7 und des an der Außenseite des an dem Implantatendabschnittes 7 anliegenden Kofferdamtuches 3 resultierenden Umfangs beschriebenen Beziehungen auch dann zu einer gewünschten Dicht- und Klemmwirkung führen können, wenn der Implantatendabschnitt 7 und der Ring 9 eine von der Kreisform abweichende (bspw. polygonale oder andere) Form aufweisen. Die exemplarisch beschriebene Kombination könnte man auch als dentalmedizinische Kombination bezeichnen.

Gemäß den vorangehenden Ausführungen zeigt Fig. 11a ein bevorzugtes Ausführungsbeispiel einer erfindungsgemäßen Anordnung der Komponenten der auch in Fig. 1a exemplarisch gezeigten erfindungsgemäßen Kombination 1. Diese Anordnung wird in einem bevorzugten Gebrauchszustand erhalten, in dem das Kofferdamtuch 3 den Implantatendabschnitt 7 außen entlang seines gesamten Umfanges umgibt, wobei der Ring 9 das den Implantatendabschnitt 7 umgebende Kofferdamtuch 3 außen entlang des gesamten Umfanges umgibt und wobei der Ring 9 mittels des Ringklemmabschnittes 10 das den Implantatendabschnitt 7 umgebende Kofferdamtuch 3 von außen an den Implantatendabschnitt andrückt. In dem exemplarisch beschriebenen Zusammenhang könnte man auch von einer dentalmedizinischen Anordnung sprechen.

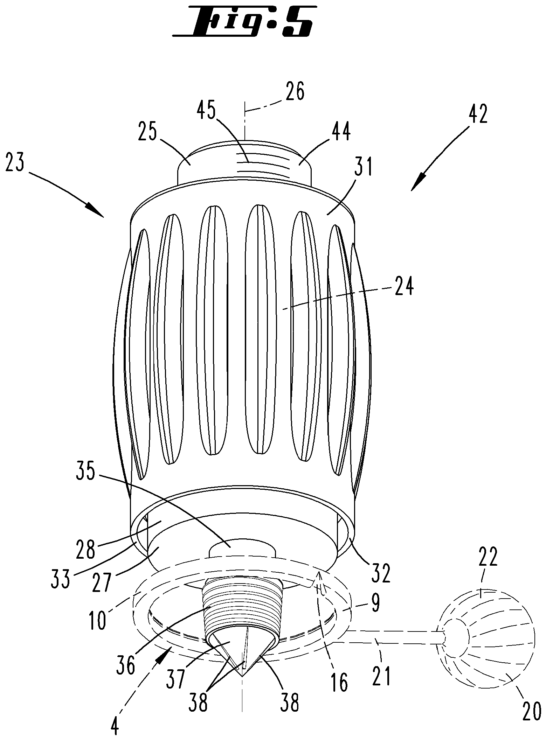

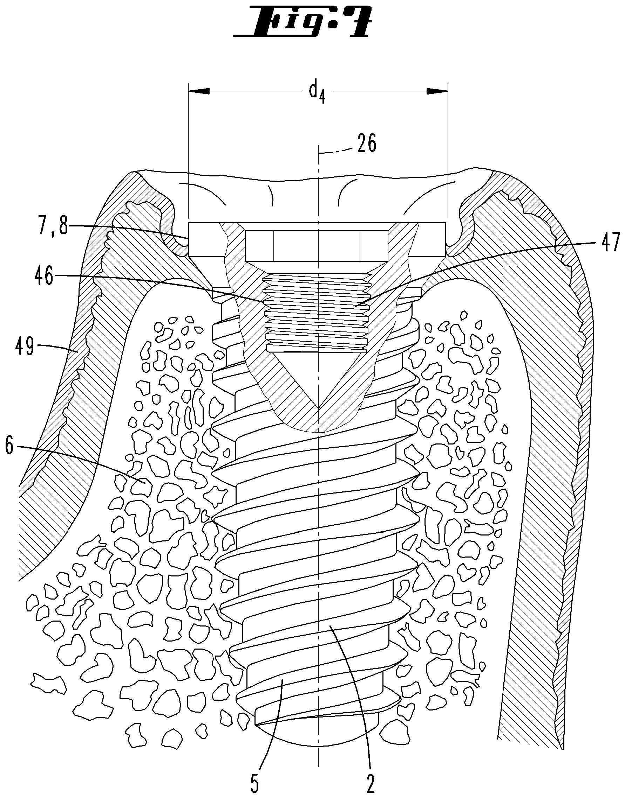

Mit Bezug auf die Figuren 1, 5 und 6 sowie nachfolgende Figuren 7 - 16 wird nun ein bevorzugtes Ausführungsbeispiel eines erfindungsgemäßen dentalmedizinischen Werkzeuges 23 vorgestellt. Gemäß den exemplarischen Figuren 1 und 7-16 kann das Werkzeug 23 zur lösbaren Befestigung des Kofferdamtuches 3 an dem Implantat 2 mittels des Haltemittels 4 verwendet werden. In dem Beispiel umfasst das Werkzeug 23 ein Werkzeuginnenteil 24 und ein Werkzeugaußenteil 25. Letzteres ist in Fig. 1 am Umfang aufgebrochen dargestellt, um den Blick auf das Werkzeuginnenteil 24 zu ermöglichen. Bezüglich einer geometrischen (also gedachten) Werkzeuglängsmittelachse 26 sind das Werkzeuginnenteil 24 und das Werkzeugaußenteil 25 konzentrisch angeordnet. Das Werkzeuginnenteil 24 weist eine Stirnfläche 27 auf, die als Abstützfläche gegen eine Stirnfläche eines Implantatendabschnittes 7 dienen kann und die insofern während der Anwendung des Werkzeuges 23 in distaler (also von einem Anwender, wie einem Arzt, abgewandter) Richtung weist. In dem Beispiel erstreckt sich ausgehend von der Stirnfläche 27 in proximaler Richtung ein an seiner Außenseite kreiszylindrischer Aufsteckabschnitt 28, der zum Aufstecken eines Haltemittels, wie des zuvor beschriebenen Haltemittels 4, dient. An den Aufsteckabschnitt 28 schließt sich in proximaler Richtung ein Längenabschnitt 29 mit einem ersten Außengewinde 30 an. Das Werkzeug außenteil 25 umfasst eine Hülse 31, die ein distales Hülsenlängsende 32 aufweist. Letzteres ist stirnseitig abgeflacht und bildet somit eine distale Hülsenstirnfläche 33. An der Innenseite der Hülse 31 ist ein zu dem ersten Außengewinde 30 passendes, also zu einem Gewindeeingriff damit geeignetes, Hülseninnengewinde 34 ausgebildet. Der axiale Abstand a, also der der Abstand a in einer zu der geometrischen Werkzeuglängsmittelachse parallelen Richtung, zwischen der Stirnfläche 27 und dem distalen Längsende des Außengewindes 30 sowie ein axialer Abstand b zwischen dem distalen Hülsenlängsende 32 und dem proximalen Längsende des Hülseninnengewindes 34 sind so aufeinander abgestimmt, dass das Werkzeugaußenteil 25, ausgehend von einer gegebenen relativen Position zu dem Werkzeuginnenteil 24, mittels Drehung des Werkzeugaußenteils 25 relativ zu dem Werkzeuginnenteil 24 zufolge des Gewindeeingriffes relativ zu dem Werkzeuginnenteil so weit in distaler Richtung bewegbar ist, dass dabei eine Bewegung des distalen Hülsenlängsendes 32 entlang des Aufsteckabschnitts 28 resultiert. Das in den Figuren gezeigte Beispiel ist so ausgeführt, dass sich das Werkzeugaußenteil 25 nach proximal so weit zurückdrehen lässt, dass sich das distale Hülsenlängsende 32 und das proximale Längesende des Aufsteckabschnittes 28 in einer gemeinsamen, zu der Werkzeuglängsmittelachse 26 senkrechten Bezugsebene befinden. Die Abstimmung ist so gewählt, dass sich das Werkzeugaußenteil 25 relativ zu dem Werkzeuginnenteil 24 so weit in distaler Richtung verlagern lässt, bis das distale Hülsenlängsende 32 nach distal über die von der Stirnfläche 27 aufgespannte Bezugsebene E übersteht, übersteht, also noch etwas weiter als bis die in Fig. 11 gezeigte Position. Erkennbar sind in dem Ausführungsbeispiel der genannte Abstand a, der besagte Abstand b, die Länge l₁ des Außengewindes 30 und die Länge l₂ des Hülseninnengewindes 32 so aufeinander abgestimmt, dass sich das Werkzeugaußenteil 25, ausgehend von einer proximalen relativen Position zu dem Werkzeuginnenteil, mittels Drehung des Werkzeugaußenteils 25 relativ zu dem Werkzeuginnenteil 24 so weit in distaler Richtung bewegen lässt, dass dabei das distale Hülsenlängsende 32 die gesamte axiale Erstreckung bzw. Länge bei gleichzeitiger Drehung überfährt. Dies ermöglicht, dass das Werkzeugaußenteil 25 zunächst relativ zu dem Werkzeuginnenteil in proximaler Richtung so weit verlagert wird, dass zumindest ein Längenteilabschnitt, bezogen auf eine parallel zu der Werkzeuglängsmittelachse 26 gemessene Länge, axial über das distale Hülsenlängsende 32 hinausragt, und dass dann auf den axial überstehenden Längenabschnitt des Aufsteckabschnittes 28 ein Ring 9 eines Haltemittels 4 aufgesteckt wird. Anschließend kann das Werkzeugaußenteil 25 mittels relativer Drehung relativ zu dem Werkzeuginnenteil 24 distal verlagert werden, so dass sich das distale Hülsenlängsende 32 axial gegen den Ring 9 abstützt und diesen bei weiterer Drehung axial in distaler Richtung von dem Aufsteckabschnitt 28 herunter und über diesen hinausschieben kann. Zu diesem Zweck ist in dem Beispiel vorgesehen, dass der Innendurchmesser d₅ des distalen Hülsenlängsendes 32 größer als der Außendurchmesser d₆ des Aufsteckabschnittes 28 und kleiner als ein Außendurchmesser d₇ des Ringes 9 ist.

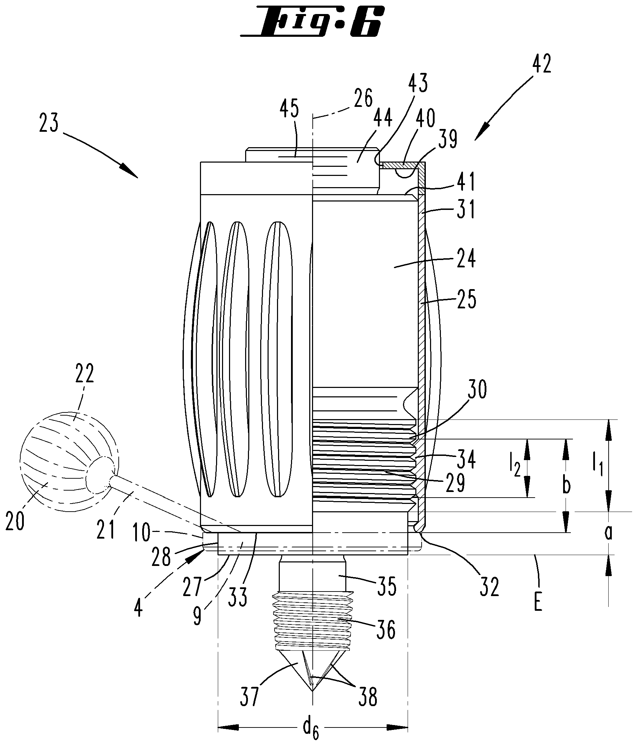

Das Werkzeuginnenteil 24 weist einen sich zentral in distaler Richtung über die Stirnfläche 27 hinaus erstreckenden, einstückig angeformten Vorsprung 35 auf. An diesem ist ein zweites Außengewinde 36 ausgebildet, das im Vergleich zu dem ersten Außengewinde 30 einen kleineren Gewindedurchmesser aufweist. An seinem distalen Längsende besitzt der Vorsprung 35 eine kegelförmige Spitze 37, die in dem Beispiel mehrere, am Umfang verteilt liegende Schneidkanten 38 aufweist. Wie bspw. Figur 6 verdeutlicht, bildet das Werkzeugaußenteil 25 einen ersten axialen Anschlag 39 aus. Dabei handelt es sich um eine nach distal weisende Oberfläche eines proximal an die Hülse 31 angeformten Ringdeckels 40. Das Werkzeuginnenteil 24 bildet einen zweiten axialen Anschlag 41 aus, der dem ersten Anschlag 39 gegenüberliegt. Bei dem zweiten Anschlag 41 handelt es sich um eine nach proximal weisende Oberfläche. Die Anschläge 39, 41 begrenzen den axialen Bewegungsweg des Werkzeugaußenteils 25 relativ zu dem Werkzeuginnenteil 24, wenn das distale Hülsenlängsende 32 axial geringfügig in distaler Richtung über die von der Stirnfläche 27 aufgespannte Bezugsebene E übersteht. Der Ringdeckel 40 weist eine zentrale Durchgangsöffnung 43 auf. Durch diese tritt axial verschieblich ein Vorsprung 44, der das proximale Längsende des Werkzeuginnenteils 24 bildet. Der Vorsprung 44 trägt an seiner Mantelfläche eine Skala 45, wobei die Anzahl der von außen sichtbaren Striche ein Maß für die relative axiale Lage von Werkzeuginnenteil 24 und Werkzeugaußenteil 25 zueinander ist. Es versteht sich, dass der Vorsprung 44 bei Bedarf verlängert werden könnte, um bspw. als Griffteil die Handhabung zu vereinfachen.

Fig. 6 zeigt gemäß einem weiteren Aspekt der vorliegenden Erfindung ein bevorzugtes Ausführungsbeispiel eines dentalmedizinischen Sets 42. Dieses umfasst in dem Beispiel das vorangehend mit Bezug auf die Figuren beschriebene dentalmedizinische Werkzeug 23 und das ebenfalls vorangehend mit Bezug auf die Figuren beschriebene Haltemittel 4, das in Fig. 6 gestrichelt dargestellt ist. In dem Beispiel ist der Durchmesser d₁ der Kreiskontur 14, auf welcher die Schneidkante 15 verläuft, geringfügig kleiner als der Außendurchmesser d₆ des Aufsteckabschnittes 28. Dadurch resultiert in aufgestecktem Zustand des Ringes 9 eine leichte Klemm-Steckverbindung, die zwar als Verlierschutz eine Halterung an dem Werkzeug 23 bietet, die aber andererseits zulässt, dass der Ring 9 mittels Drehung des Werkzeugaußenteils 25 in distaler Richtung von dem Aufsteckabschnitt 28 heruntergeschoben werden kann.

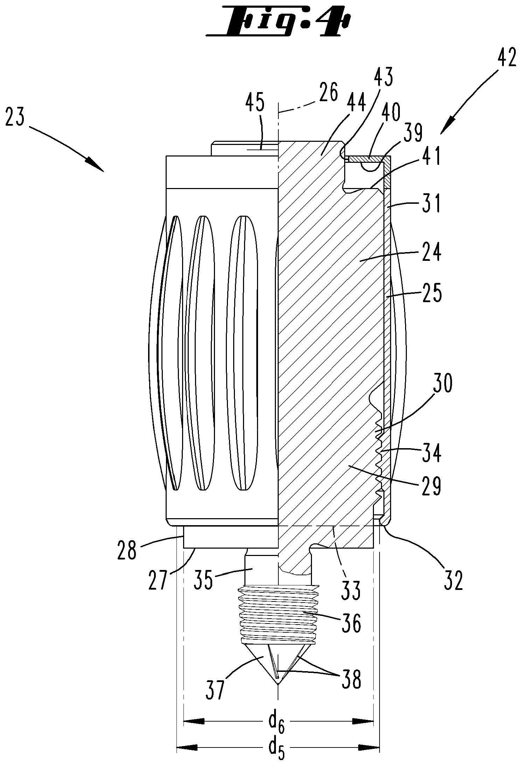

Ein dentalmedizinisches Set 42 gemäß einem weiteren Aspekt der Erfindung kann zum Beispiel die mit Bezug auf Fig. 6 beschriebenen Komponenten und zusätzlich das bspw. in Fig. 1a gezeigte Implantat 2 und das dort gezeigte Kofferdamtuch 3 umfassen, vgl. auch Fig. 1. Insofern kann ein dentalmedizinisches Set 42 zum Beispiel die in Fig. 1a gezeigte Kombination 1 und das zum Beispiel in Fig. 4 dargestellte dentalmedizinische Werkzeug 23 umfassen.

Das in den Figuren 1, 1a gezeigte Implantat 2 besitzt an seinem proximalen Implantatendabschnitt 7 eine an dem proximalen Längesende offene Ausnehmung 46 mit einem darin ausgebildeten Innengewinde 47. Das Innengewinde 47 ist für einen Gewindeeingriff passend zu dem an dem Vorsprung 35 ausgebildeten zweiten Außengewinde 36 ausgebildet. Bei dem Beispiel entspricht der stirnseitige (d.h. auf die Stirnfläche 27 bezogene) Außendurchmesser d₆ des Aufsteckabschnittes 28 dem stirnseitigen Außendurchmesser d₄ der Implantataußenoberfläche 8 des Implantatendsbschnittes 7. Dies erleichtert das Verschieben des Ringes 9 von dem Aufsteckabschnitt 28 auf den Implantatendabschnitt 7.

Mit Bezug auf die Figuren 7 - 16 wird exemplarisch eine bevorzugte Funktionsweise und ein mögliches Anwendungsbeispiel der vorangehend beschriebenen Komponenten vorgestellt. Die Darstellungen sind (wie auch die vorangehenden Figuren) schematisch vereinfacht und nicht größengerecht. Fig. 7 zeigt einen Querschnitt durch einen Bereich eines Kieferknochens 6, der außenseitig von Zahnfleisch 49 bedeckt ist. In den Kieferknochen 6 wurde das schon beschriebene Implantat 2 eingesetzt.

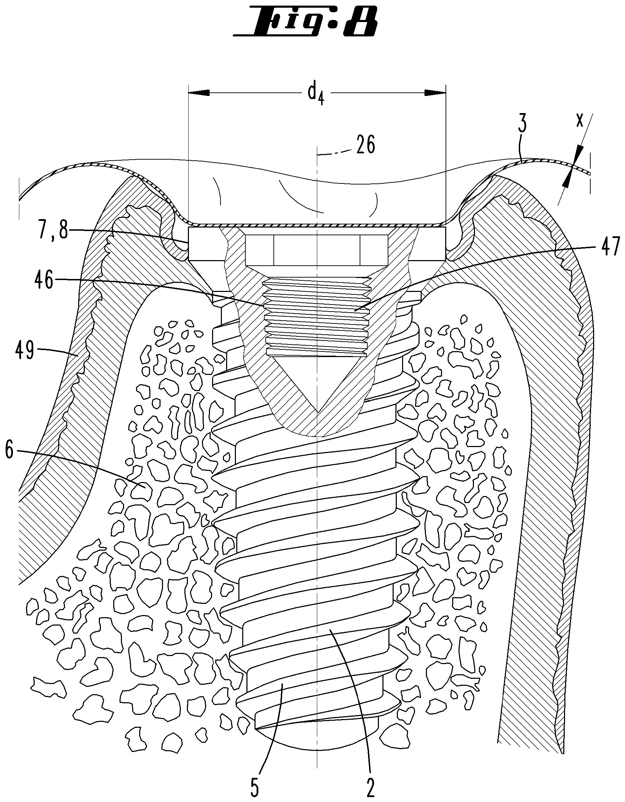

Bei einem nachfolgenden, in Fig. 8 gezeigten Verfahrensschritt wurden das proximale Längsende des Implantats 2 und der angrenzende Außenbereich (Kieferknochen 6 im Zahnfleisch 49) mittels eines Kofferdamtuches 3 vollständig abgedeckt.

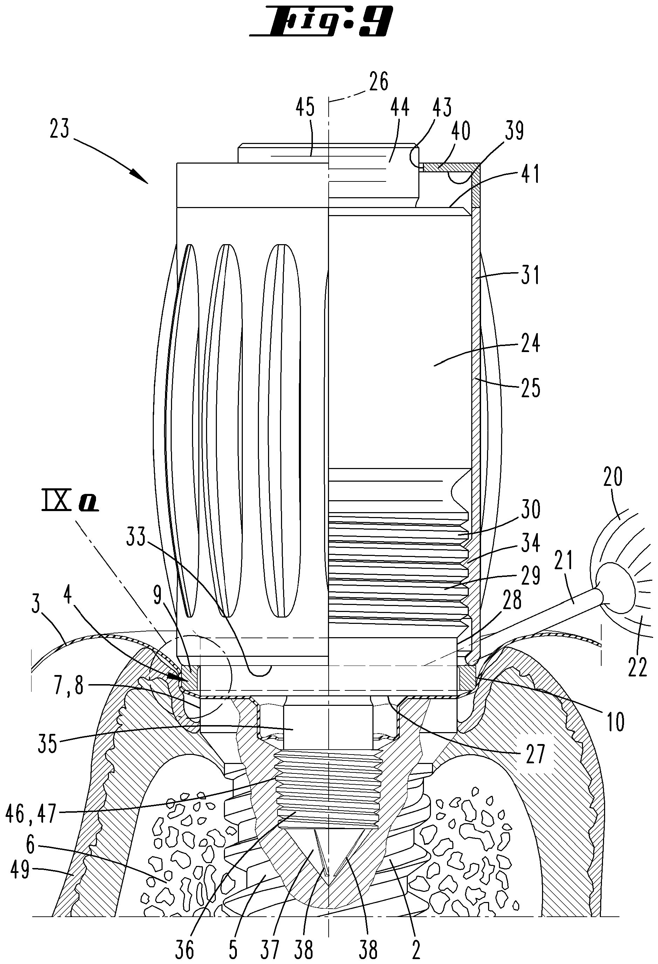

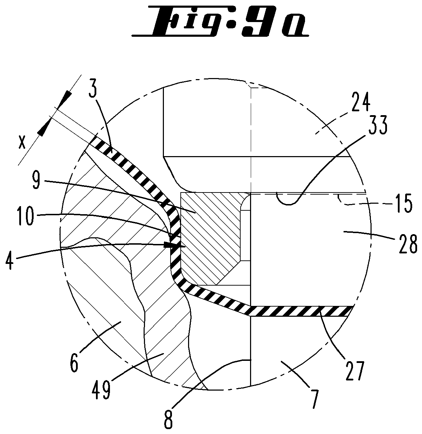

Bei einem nachfolgenden, in Fig. 9 gezeigten Verfahrensschritt bzw. Gebrauchszustand wurde das zahnmedizinische Werkzeug 23 bei Durchtrennung und Durchdringung des Kofferdamtuches 3 auf das proximale Längsende des Implantats 2 aufgeschraubt. Dazu wurde zunächst das Kofferdamtuch 3 mittels der Spitze 37 und den daran ausgebildeten Schneidkanten 38 aufgetrennt, so dass der Längenabschnitt des Vorsprunges 35 mit dem Außengewinde 36 durch die gebildete Öffnung im Kofferdamtuch 3 hindurchgesteckt und in das Innengewinde 47 eingeschraubt werden kann. Da in dem Beispiel der zwischen erstem Außengewinde 30 und Hülseninnengewinde wirksame Drehwiderstand größer ist als der Drehwiderstand zwischen Außengewinde 36 und dem Innengewinde 47, kann das Werkzeug beim Einschrauben in das Implantat 2 auch wahlweise am Werkzeugaußenteil 25 gegriffen werden. Die Einschraubtiefe ist so gewählt, dass sich die Stirnfläche 27 des Werkzeuginnenteils 24 flächig auf dem Kofferdamtuch 3 abstützt, welches seinerseits eben auf der proximalen Stirnfläche des Implantatendabschnittes 7 aufliegt. Vor dem Aufschrauben des Werkzeuges 23 wurde das Werkzeugaußenteil 25 in seine proximale Endlage relativ zum dem Werkzeuginnenteil 24 gebracht und der Ring 9 eines Haltemittels 4 auf den Aufsteckabschnitt 28 aufgesteckt, bis er axial gegen das distale Hülsenlängsende 32 tritt.

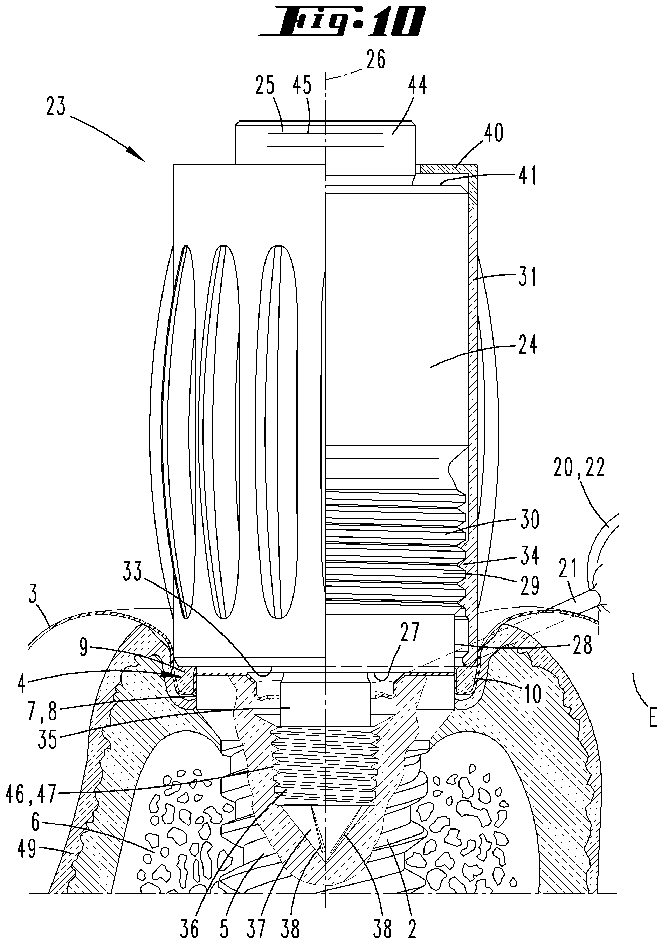

Fig. 10 zeigt einen Gebrauchszustand als Ergebnis eines nachfolgenden Verfahrensschrittes. Dabei wurde das Werkzeugaußenteil 25 relativ zu dem Werkzeuginnenteil 24 in distaler Richtung bewegt, so dass der Ring 9 mittels des distalen Hülsenlängsendes 32 bereits teilweise von dem Aufsteckabschnitt 28 herunter und auf den Implantatendabschnitt 7 aufgeschoben wurde. Wie Fig. 10 zeigt, wird das Kofferdamtuch 3 dabei in dem zwischen dem Ringklemmabschnitt 10 und dem Implantatendabschnitt 7 gebildeten Ringspalt umlaufend einlagig anliegend eingeklemmt. Wird die Drehung des Werkzeugaußenteils 25 relativ zu dem Werkzeuginnenteil 24 fortgesetzt, wird der Ring 9 schließlich vollständig von dem Aufsteckabschnitt 28 abgedrückt und auf den Implantatendabschnitt aufgeschoben. Dies zeigen Fig. 11 und die Ausschnittsvergrößerung in Fig. 11a.

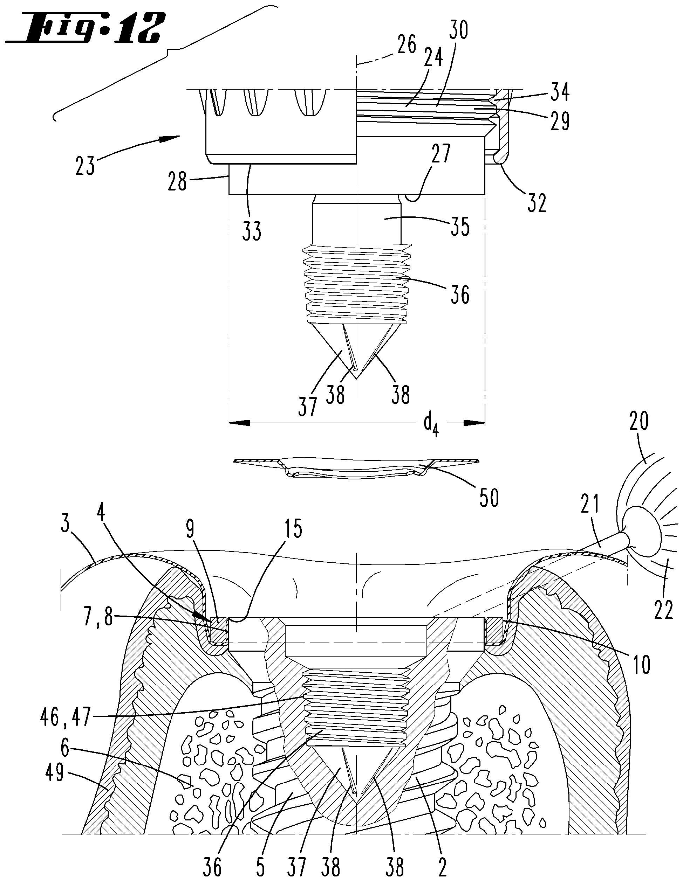

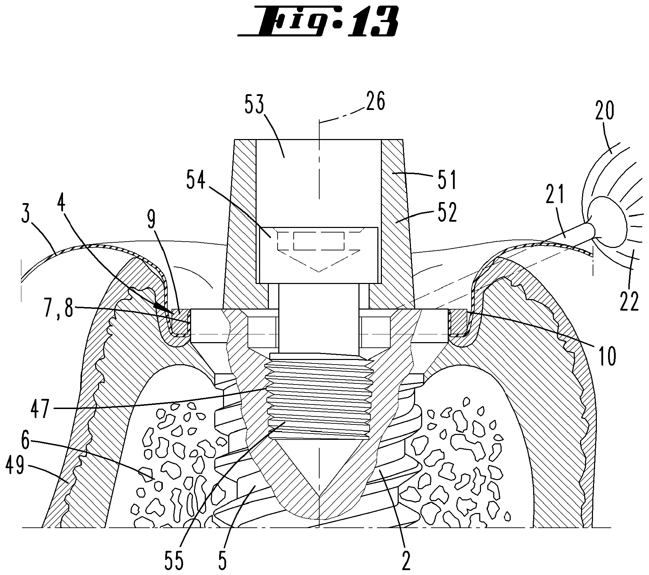

Fig. 12 zeigt einen späteren Gebrauchszustand, bei dem, ausgehend von Fig. 11, das Werkzeug 23 wieder von dem Implantat 2 abgeschraubt und gemeinsam mit einem mittels der Schneidkante 15 ausgeschnittenen Kofferdamtuchabschnitt 50 von der Behandlungsstelle entfernt wurde. Bei dem in Fig. 13 gezeigten, nachfolgenden Gebrauchszustand wurde in einem weiteren Verfahrensschritt ein sog. Aufbau 51, bei dem es sich um eine Hülse 52 mit einem durchgehenden inneren Verschraubungskanal 53 handelt, auf die proximale Stirnseite des Implantats 2 aufgesetzt. Der Aufbau 51 wurde mittels einer Schraube 54, deren Außengewinde zu dem Innengewinde 47 passt, an dem Implantat 2 fest angeschraubt.

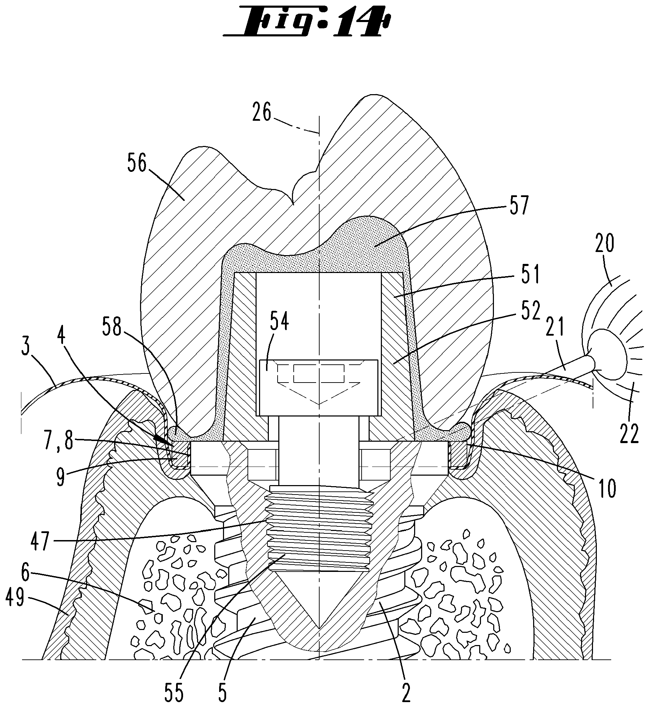

Davon ausgehend wurde, um zu dem in Fig. 14 gezeigten späteren Gebrauchszustand zu gelangen, eine Krone 56 mittels für zahnmedizinische Zwecke bestimmten Zement 57 auf das Implantat 2 und den Aufbau 51 aufgeklebt. Gut erkennbar ist, dass an dem seitlichen Rand der Klebezone ein Wulst 58 aus Zement 57 aus der Kontaktzone hervortritt. Erkennbar ist auch, dass der Wulst 58 mittels des Kofferdamtuches 3 vollständig von dem Kieferknochen 6 und dem Zahnfleisch 49 abgeschirmt ist, so dass es zu keinem unerwünschten Kontakt kommen kann.

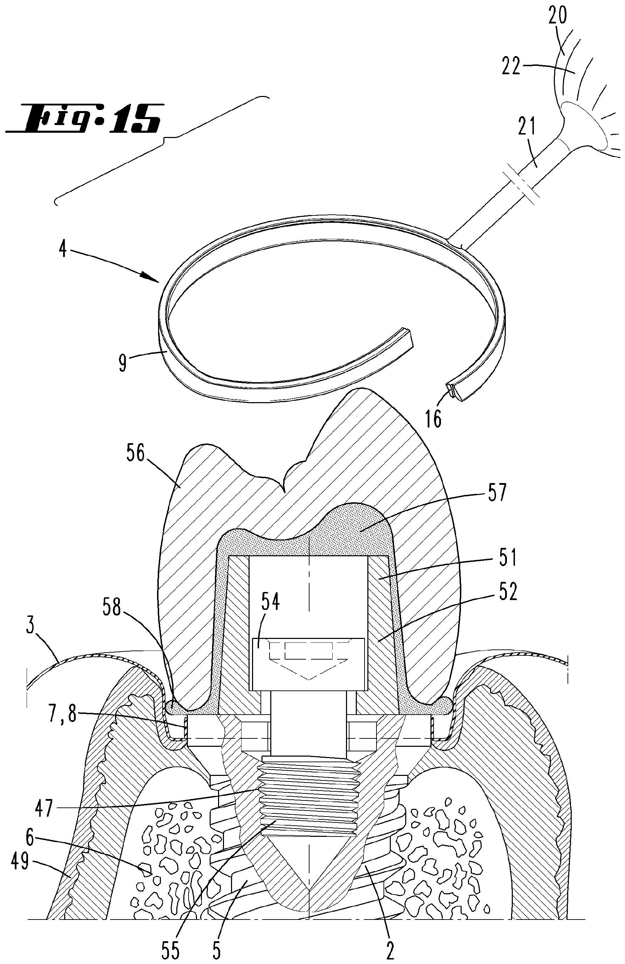

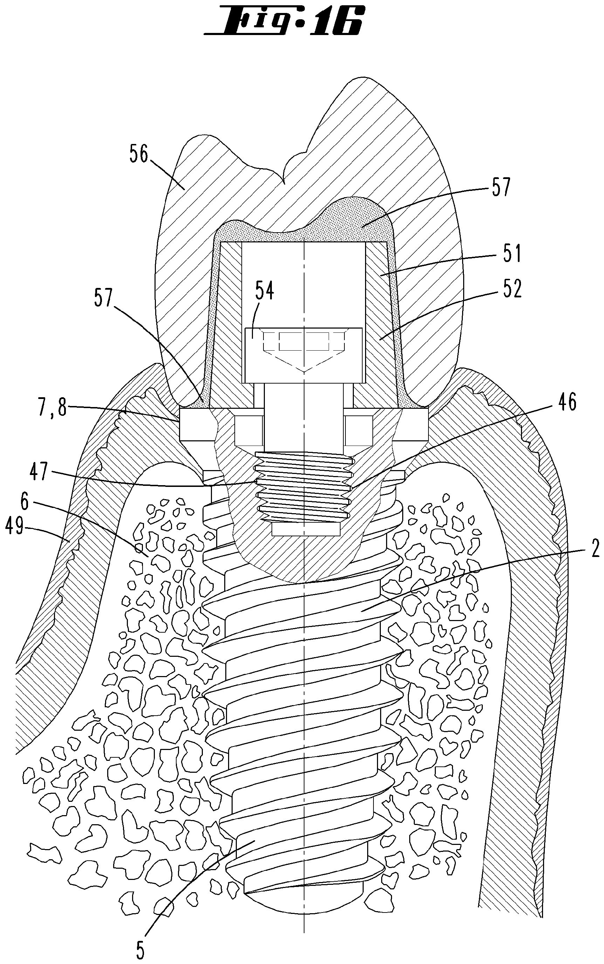

In einem folgenden Verfahrensschritt wurde, um zu dem in Fig. 15 gezeigten Gebrauchszustand zu gelangen, das Haltemittel 4 aus der zuvor beschriebenen Anordnung entfernt. Dazu wurde mittels des Griffes 20 eine nach außen wirkende Zugkraft auf den Ring 9 ausgeübt, bis die wirksame Kraft zu einem dabei gewünschten Versagen an der Sollbruchstelle 16 führte. Nachdem der Ring 9 an der Sollbruchstelle 16 zerrissen ist, kann das Haltmittel 4 einfach weggezogen werden. Auch in diesem Zustand sind der Kieferknochen 6 und das Zahnfleisch 49 mittels des Kofferdamtuches 3 noch vollständig von dem Zement 57 bzw. den Wulst 58 abgeschirmt. In dem in Fig. 15 gezeigten Gebrauchszustand kann auch das Kofferdamtuch 3 problemlos entfernt werden, insbesondere nachdem es seitlich aufgeschnitten wurde. Fig. 16 zeigt das in den Kieferknochen 6 eingesetzte Implantat mit dem darauf befindlichen Aufbau 51 und der Krone ohne 56 in fertigem Zustand.

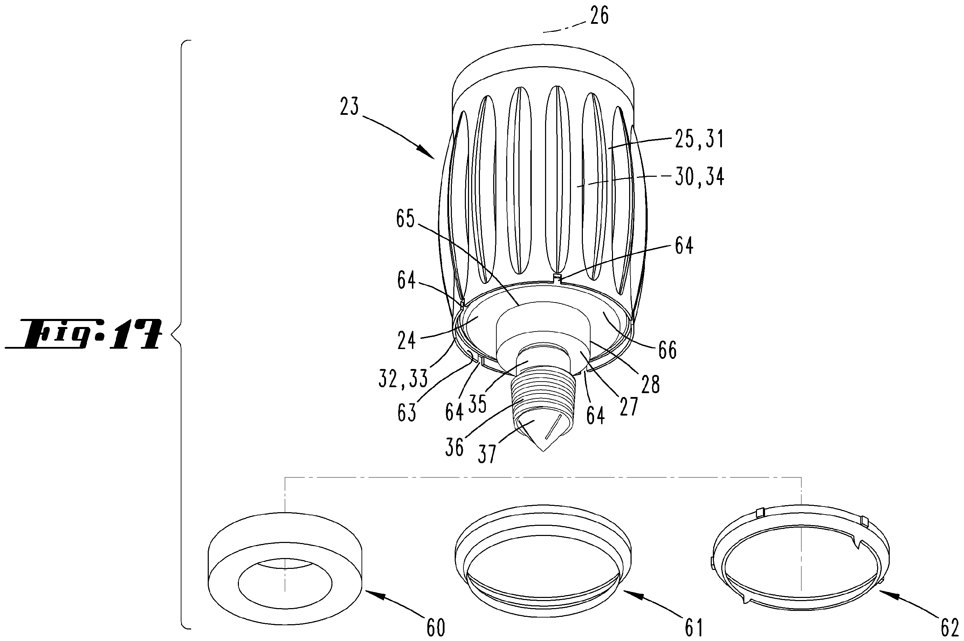

Fig. 17 zeigt schematisch ein weiteres bevorzugtes Ausführungsbeispiel eines erfindungsgemäßen dentalmedizinischen Werkzeuges 23. Darin sind zur besseren Übersicht, wie auch in den nachfolgenden Figuren, den Merkmalen in früheren Figuren entsprechende Merkmale oder ersatzweise gewählte Merkmale mit den gleichen Bezugsziffern bezeichnet. Das in Fig. 17 gezeigte Werkzeug 23 unterscheidet sich von dem in den vorangehenden Figuren gezeigten Werkzeug 23 dadurch, dass es einen vergleichsweise schlankeren Aufsteckabschnitt 28 aufweist und dass das Werkzeug 23 als in Fig. 17 schematisch lose und zur wahlweisen Befestigung dargestellte Komponenten einen Aufsteckadapter 60 und zwei zueinander unterschiedliche Schneidaufsätze 61 und 62 umfasst.

Die vergleichsweise schlanke Ausgestaltung des Aufsteckabschnittes 28 bietet Vorteile für weitere mögliche Verwendungen des Werkzeuges 23. Zum Beispiel kann dadurch der Einsatzbereich erweitert werden auf das nach dem Einheilen eines Implantats häufig zunächst erforderliche Entfernen von Zahnfleisch von dessen Oberseite. Hierauf wird auch mit Bezug auf nachfolgende Figuren näher eingegangen. Von Vorteil ist dabei, dass in Bezug auf zu der Werkzeuglängsmittelachse 26 radialen Richtungen im Vergleich zu dem in vorangehenden Figuren gezeigten Werkzeug 23 ein größerer Abstand zwischen dem Aufsteckabschnitt 28 und der Hülse 31 gebildet ist, so dass der Aufsteckabschnitt 28 zunächst von Zahnfleisch umgeben sein kann.

Das distale Hülsenlängsende 32 weist eine nach innen weisende Oberfläche 63 auf, die in einer zu der Werkzeuglängsmittelachse 26 senkrechten Querschnittsebene eine entlang einer Kreiskontur verlaufende Innenkontur bildet. Entlang des um die Werkzeuglängsmittelachse 26 führenden Umfanges erstreckt sich die Innenkontur, abgesehen von den an ihrem Umfang verteilt ausgebildeten Ausnehmungen 64, mit von der Werkzeuglängsmittelachse 26 einheitlichem radialem Abstand d. Der Aufsteckabschnitt 28
besitzt eine zylindrische Mantelfläche. In einer zu der Werkzeuglängsmittelachse 26 senkrechten Querschnittsebene besitzt diese Mantelfläche eine kreisrunde Außenkontur, die sich entlang des um die Werkzeuglängsmittelachse 26 führenden Umfanges von der Werkzeuglängsmittelachse 26 in einem einheitlichen radialen Abstand c erstreckt. Bei den gewählten Abmessungen liegt das Verhältnis von d zu c wertemäßig in einem Wertebereich von 1,1 - 2.

An dem von der Stirnfläche 27 axial entfernten Längsende 65 des Aufsteckabschnittes 28 bildet das Werkzeuginnenteil 24 eine zu der Werkzeuglängsmittelachse 26 senkrechte Oberfläche 66 aus. Diese kann zum Beispiel beim Gebrauch des Aufsteckadapters 60 zu dessen axialer Anlage oder Abstützung dienen.

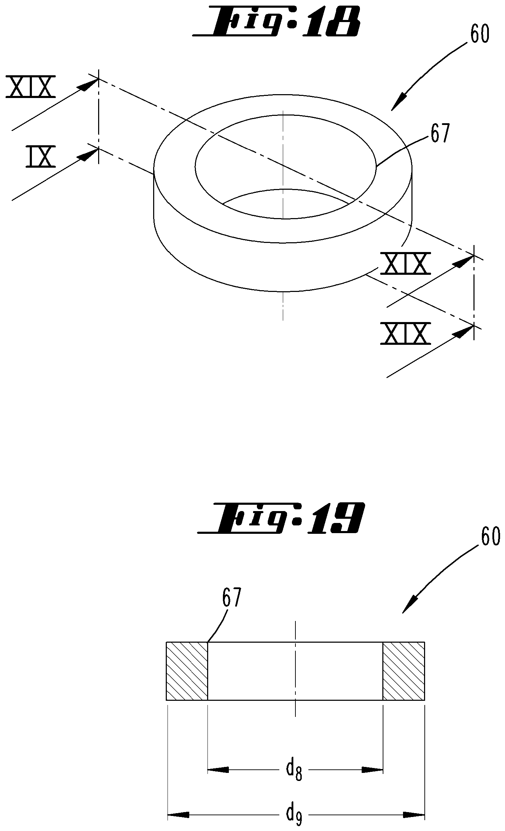

Der in den Fig. 17 bis 20 gezeigte Aufsteckadapter 60 kann bei Bedarf auf den Aufsteckabschnitt 28 spielfrei zentrierend und unter Erzielung eines leichten Klemmsitzes aufgesteckt werden. Der Aufsteckadapter 60 besitzt eine zylindrische Innenfläche, d.h. eine kreisförmige Ringinnenkontur 67 (vgl. Fig. 18, 19) deren Durchmesser d₈ zu diesem Zweck geeignet an den äußeren Durchmesser des Aufsteckabschnittes 28 angepasst ist.

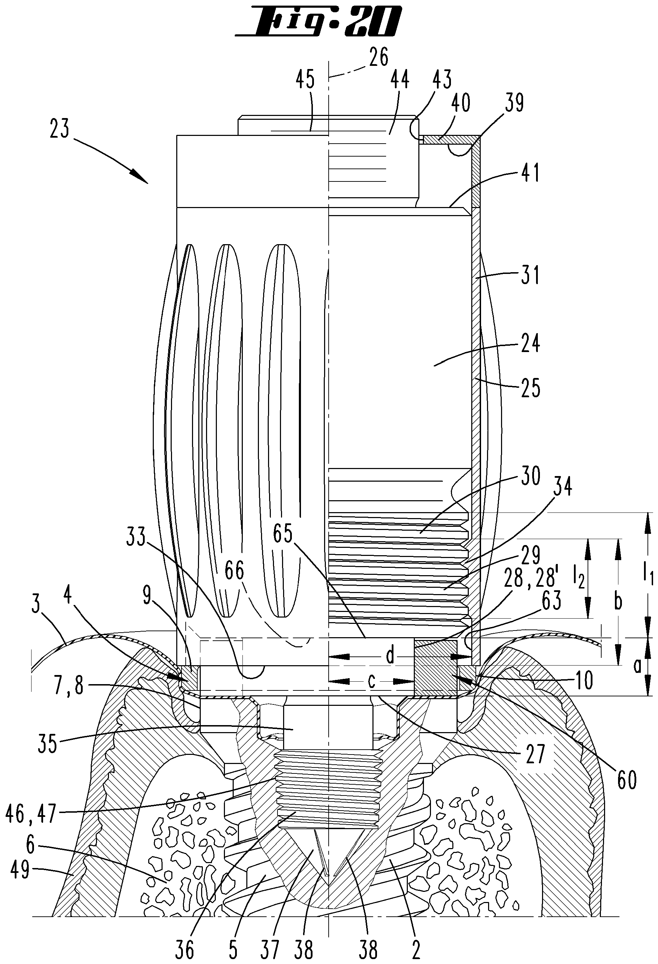

Der in Fig. 20 exemplarisch gezeigte bevorzugte Gebrauchszustand ähnelt dem mit Bezug auf die Fig. 9 beschriebenen Gebrauchszustand des dort gezeigten Werkzeuges 23. Insofern wird auf die vorangehende Beschreibung Bezug genommen. Dabei wird das Werkzeug 23 eingesetzt, um ein Kofferdamtuch 3 mittels eines Haltemittels 4 an einer Implantataußenoberfläche 8 eines Implantatendabschnittes 7 zu befestigen. Der Unterschied liegt darin, dass in dem Beispiel von Fig. 20 das Haltemittel 4 nicht unmittelbar auf den Aufsteckabschnitt 28 gesteckt ist. Stattdessen wurde auf den vergleichsweise schlankeren Aufsteckabschnitt 28 der Aufsteckadapter 60 aufgesteckt und auf diesen außenseitig das ringförmig verlaufende Haltemittel 4. Die Kombination aus Werkzeug 23 und Haltemittel 4 bildet ein Ausführungsbeispiel eines dentalmedizinischen Sets 42. Dazu entspricht der Durchmesser d₉ der zylindrischen Außenoberfläche des Aufsteckadapters 60 dem Außendurchmesser der Implantataußenoberfläche 8.

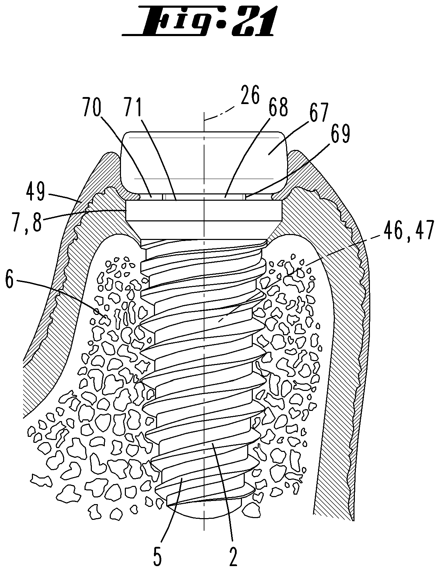

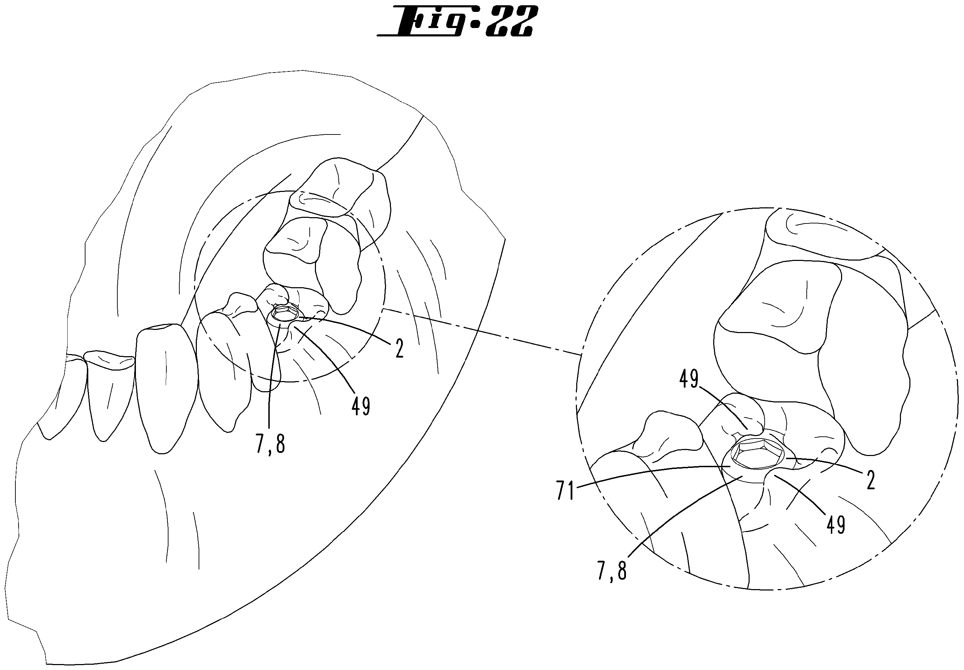

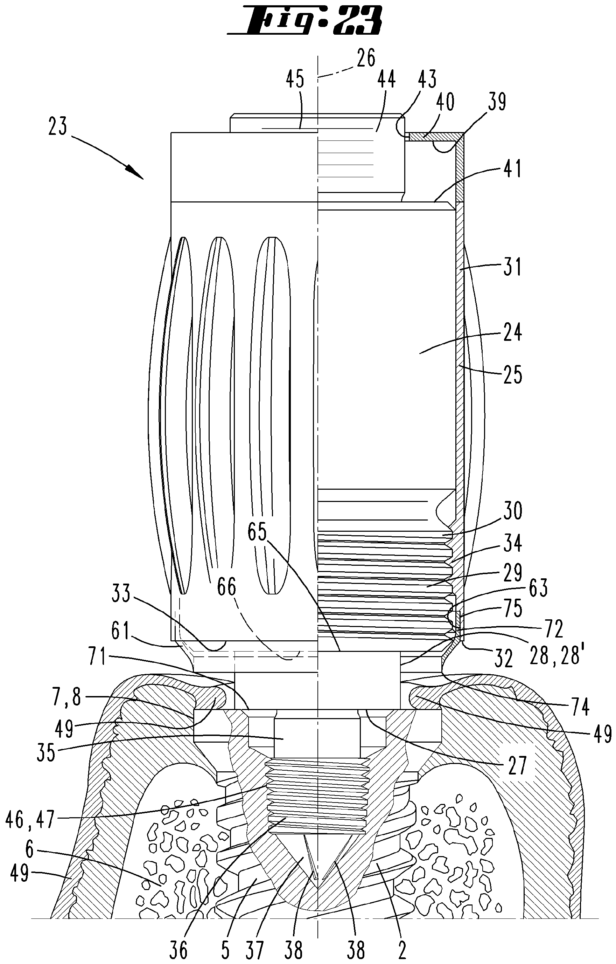

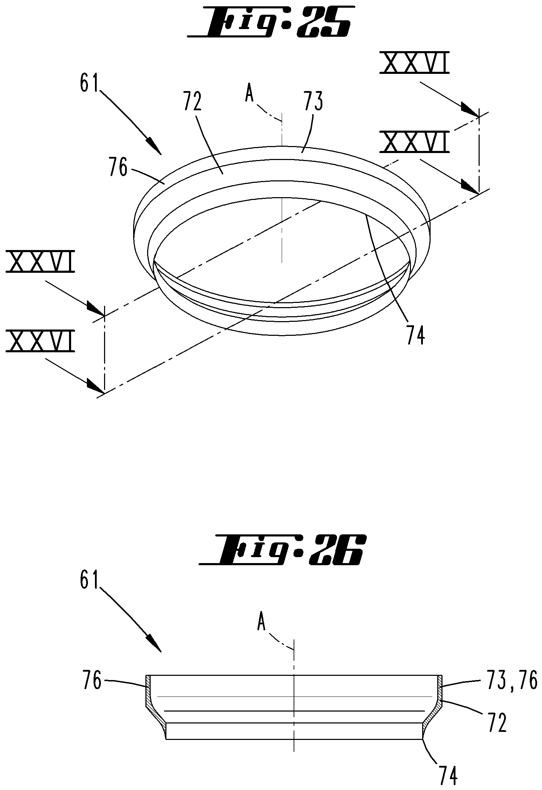

Fig. 21 zeigt einen vergrößerten Teilschnitt durch einen Kieferbereich. In den Kieferknochen 6 wurde ein Implantat 2 eingesetzt. Für die Einheilungsphase wurde eine sog. Heilungskappe 67 an dem Implantat 2 lösbar angebracht. Dazu besitzt die in Fig. 21 gezeigte Heilungskappe 67 einen Schaft 68 mit einem Außengewinde 69, der in das Innengewinde 47 (vgl. auch Fig. 23) in dem Implantat 2 eingeschraubt ist. Bei der in Fig. 21 gezeigten Situation hat sich die Schraubverbindung, ausgehend von einem zunächst fest verschraubten Zustand, etwas gelockert, so dass ein Spalt 70 entstanden ist, in welchem in der Darstellung der Schaft 68 mit dem Außengewinde 69 sichtbar ist. Bei einer solchen unbeabsichtigten Lockerung besteht, wie in Fig. 21 schematisch gezeigt, die Gefahr, dass Zahnfleisch 49 von dem Außenrand in den Spalt 70 eindringt. Wird nach dem Ende der Einheilungsphase des Implantats 2 die Heilungskappe 67 abgeschraubt, kann es, wie in Fig. 22 schematisch gezeigt, vorkommen, dass eine Implantatstirnfläche 71 von dem Außenrand ausgehend teilweise mit Zahnfleisch 49 bedeckt ist. Dies erschwert die nachfolgende Behandlung, bei der an dem Implantat 2 ein Aufbau 51 und daran eine Krone 56 (vgl. zum Beispiel Fig. 14) befestigt wird. Für eine gewünschte nachfolgende Behandlung muss daher zunächst das über die Ränder überstehende Zahnfleisch 49 entfernt werden. Dies kann auf vorteilhafte Weise mit dem in Fig. 17 gezeigten dentalmedizinischen Werkzeug 23 bei Gebrauch seines Schneidaufsatzes 61 erfolgen. Dieser ist als Einzelteil in den Fig. 25, 26 gezeigt. Er umfasst einen ringförmigen Grundkörper 72, der einen Montageabschnitt 73 und an seinem davon abgewandten Längsende eine Schneide 74 aufweist. Der Montageabschnitt 73 ist zylindrisch gestaltet und lässt sich, wie Fig. 23 im Teilschnitt zeigt, von dem distalen Hülsenlängsende 32 ausgehend in eine in der Hülse 31 ausgebildete umlaufende Ausnehmung 75 einstecken, so dass eine konzentrische Ausrichtung des Schneidaufsatzes 61 und gleichzeitig, zufolge aufeinander abgestimmter Durchmesser der Hülse 31 und des Montageabschnittes 73, eine leichte Klemmwirkung resultiert. Bei dem Montageabschnitt 73 handelt es sich insofern auch um einen Zentrierabschnitt 76. In dem Beispiel sind ein Außendurchmesser des Zentrierabschnittes 76 und ein Innendurchmesser der Hülse 31 im Bereich der Ausnehmung 75 zur Erzielung einer leichten Übergangspassung aneinander angepasst.

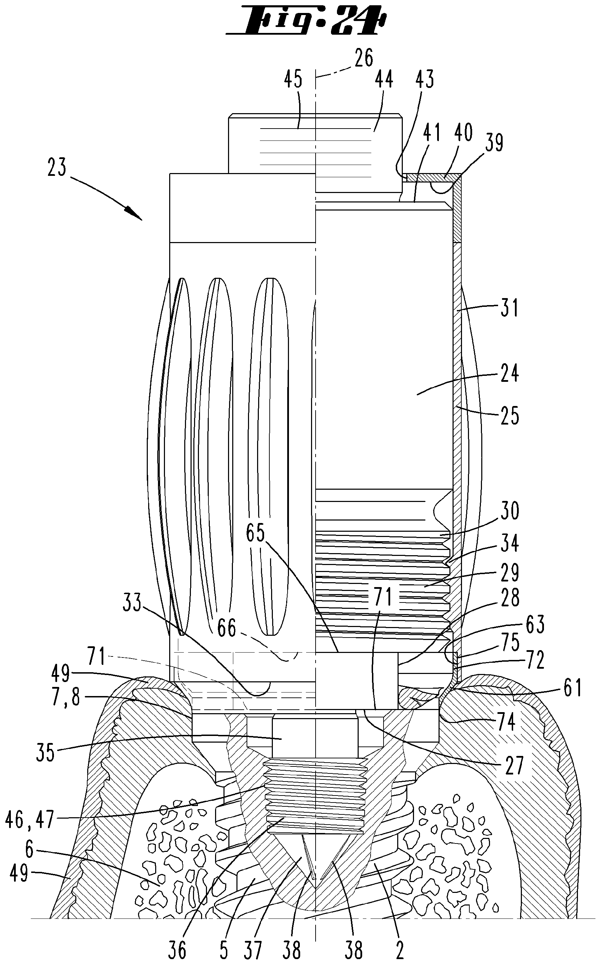

Fig. 23 zeigt einen ersten bevorzugten Gebrauchszustand, bei welchem das Werkzeug 23 mittels seines Außengewindes 36 so tief in das Innengewinde 47 des Implantats 2 eingeschraubt wurde, dass die Stirnfläche 27 des Aufsteckabschnittes 28 gegen die Implantatstirnfläche 71 angedrückt ist. Auf diese Weise kann das Werkzeug 23 an dem Implantat 2 ausgerichtet und lösbar befestigt werden. Das dentalmedizinische Werkzeug 23 und das Implantat 2 sind Bestandteile eines dentalmedizinischen Sets 42, das bei Bedarf weitere Komponenten aufweisen kann. In Fig. 23 ist mittels des Außengewindes 30 und des Hülseninnengewindes 34 eine axiale Relativlage der Hülse 31 zu dem Werkzeuginnenteil 24 gewählt, bei welcher sich die Schneide 74 noch mit Abstand von dem Zahnfleisch 49 befindet, das von außen über die Implantatstirnfläche 71 ragt. Wird, von dieser Gebrauchsstellung ausgehend, die Hülse 31 in das Werkzeuginnenteil 24 in die entsprechend der Gewindesteigung richtige Drehrichtung gedreht, resultiert zusätzlich eine Axialbewegung der Hülse 31 in Richtung zu dem Implantat 2, in deren Verlauf die ringförmige Schneide 74 in das Zahnfleisch 49 eindringt und das wulstartig über die Implantatstirnfläche 71 ragende Zahnfleisch 49 durchtrennt. Dabei ist bevorzugt (wenn auch nicht zwingend), dass die Steckverbindung zwischen dem Montageabschnitt 73 und der Hülse 31 nur eine zum Halten des Schneidaufsatzes 61 reichende Klemmkraft erzeugt, die jedoch nicht ausreicht, um beim Drehen der Hülse 31 auch eine drehende Mitnahme des Schneidaufsatzes 61 zu bewirken. Insofern ist bevorzugt, dass der Schneidaufsatz 61 von dem Zahnfleisch 49 in Umfangsrichtung gehalten wird und wie eine Stanze eine ausschließliche oder überwiegende axiale Schneidbewegung ausführt. Ausgehend von dem in Fig. 24 gezeigten Gebrauchszustand kann das Werkzeug 23 von dem Implantat 2 abgeschraubt und das abgeschnittene Zahnfleisch 49 entfernt werden. Daraufhin kann der Schneidaufsatz 61 von der Hülse 31 abgenommen und das Werkzeug 23 dann anderweitig eingesetzt werden. Bevorzugt ist, dass sodann auf den Aufsteckabschnitt 28, wie in Fig. 20 gezeigt, der Aufsteckadapter 60 und auf diesen außenseitig ein Haltemittel 4 aufgesteckt wird und dass das Werkzeug 23 damit zur Fixierung eines Kofferdamtuches 3 an dem Implantatendabschnitt 7 verwendet wird. Bei dem bspw. in Fig. 23 gezeigten Werkzeug 23 ist dazu der sich axial von dem Außengewinde 30 bis zu der Stirnfläche 27 erstreckende Werkzeuginnenteil-Längenabschnitt 28' als Aufsteckabschnitt 28 ausgebildet. Alternativ ist denkbar, dass der Werkzeuginnenteil-Längenabschnitt 28' auf beliebige andere Weise ausgebildet sein kann; auch wenn eine von Fig. 20 abweichende Gestaltung des Werkzeuges 23 kein Aufstecken eines Aufsteckadapters 60 ermöglicht, kann das Werkzeug 23 für die zuvor beschriebene Schneidbehandlung geeignet sein.

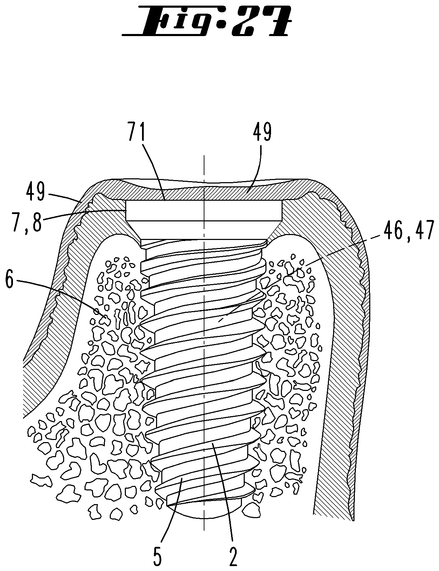

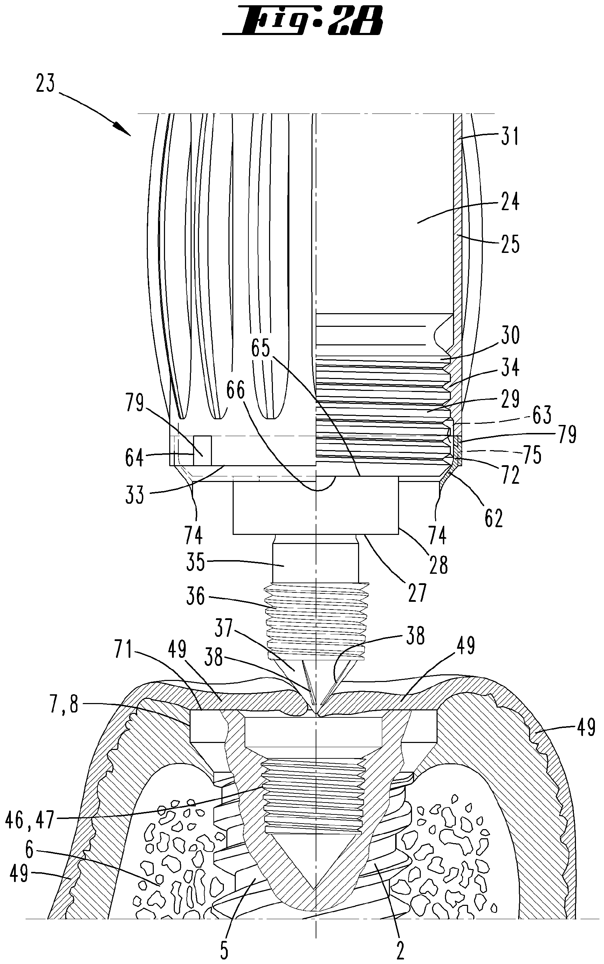

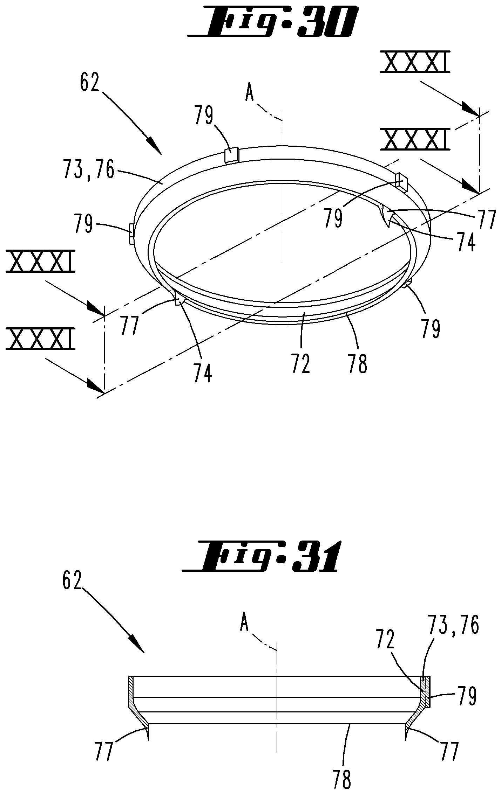

Fig. 27 zeigt einen Teilschnitt durch einen Kieferknochen 6, in den ein Implantat 2, jedoch abweichend von Fig. 21 ohne Heilungskappe eingesetzt wurde. Dies führt dazu, dass nach dem Ende der Einheilungsphase die Implantatstirnfläche 71 durchgehend von Zahnfleisch 49 bedeckt ist. Um von diesem Zustand ausgehend zunächst einen Aufbau 51 und dann eine Krone 56 an dem Implantat 2 zu befestigen, muss das die Implantatstirnfläche 71 bedeckende Zahnfleisch 49 entfernt werden. Fig. 28 zeigt dies schematisch, dass dies auf vorteilhafte Weise mit den in Fig. 17 gezeigten dentalmedizinischen Werkzeug 23 mit dessen Schneidaufsatz 62 möglich ist. Dieser ist in den Figuren 30 und 31 als Einzelteil gezeigt, wobei zur Vereinfachung teilweise die gleichen Bezugszeichen wie für den Schneidring 61 verwendet werden. Der Schneidaufsatz 62 umfasst einen Grundkörper 72, dessen Montageabschnitt 73 auch als Zentrierabschnitt 76 dient. Wie der Schneidaufsatz 61 verjüngt sich auch der Schneidaufsatz 62 zu seinem zu dem Montageabschnitt 73 entgegengesetzten Längsende hin. Ein Unterschied zu dem Schneidaufsatz 61 liegt darin, dass der Schneidaufsatz 62 keine kreisförmige Schneide besitzt. Stattdessen weist der in dem Beispiel einstückig ausgebildete Schneidaufsatz 62 zwei an seinem Umfang einander gegenüberliegende Skalpellvorsprünge 77 auf, die sich ausgehend von einer ringförmigen Stirnfläche 78 entlang einer geometrischen Mittelachse A des Schneidaufsatzes 62 erstrecken. Die Skalpellvorsprünge sind hakenförmig ausgebildet, wobei jeweils eine Hakenseite als Schneide 74 ausgebildet ist. Der Schneidaufsatz 62 ist einstückig ausgebildet. Von seinem Montageabschnitt 73 stehen außenseitig mehrere entlang des Umfanges verteilt angeordnete Vorsprünge 79 zur Seite ab. Den Vorsprüngen 79 sind an dem distalen Hülsenlängsende 32 mehrere am Umfang verteilt ausgebildete Ausnehmungen 64 zugeordnet. Die Ausnehmungen 64 und die Vorsprünge 79 sind so aufeinander abgestimmt, dass je ein Vorsprung 79 in je eine Ausnehmung 64 eingreift, wenn, wie in Fig. 28 gezeigt ist, der Schneidaufsatz 62 mit seinem Montageabschnitt 73 in die im Wesentlichen ringförmige Ausnehmung 75 des distalen Hülsenlängsendes 32 eingesteckt ist. Dadurch resultiert eine drehsteife Verbindung zwischen dem Schneidaufsatz 62 und der Hülse 31. Die einen Ringraum bildende Ausnehmung 75 wird in ihrer axialen Tiefe von einer Stufe in der Hülse 31 begrenzt. Die Stufe bildet einen Axialanschlag für den Schneidaufsatz 62, wie auch in Fig. 23 für den Schneidaufsatz 61. In dem axialen Überlappungsbereich sind der Außendurchmesser des Montageabschnittes 73 und der Innendurchmesser der Hülse 31 zur Erzielung einer leichten Übergangspassung aufeinander abgestimmt. An den Skalpellvorsprüngen 77 ist die Schneide 74 jeweils auf derjenigen der beiden Skalpellseiten ausgebildet, die sich in Umfangsrichtung vorwärts bewegt, wenn die Hülse 31 relativ zu dem Werkzeuginnenteil 24 in eine Richtung gedreht wird, bei der zufolge des Gewindeeingriffs eine axiale Relativbewegung der Hülse 31 in Richtung zu dem Vorsprung 35 resultiert. Zufolge dieser Ausgestaltung bewirkt eine solche Drehbewegung einen gleichzeitigen Vorschub der Schneiden 74 in eine Umfangsrichtung und in eine Axialrichtung. Insofern handelt es sich bei den Vorsprüngen 79 um erste Mittel und bei den Ausnehmungen 64 um zweite Mittel, die in
einem an der Hülse 31 angebrachten Zustand des Schneidaufsatzes 62 einen Drehformschluss des Schneidaufsatzes 62 relativ zu der Hülse 31 bewirken.

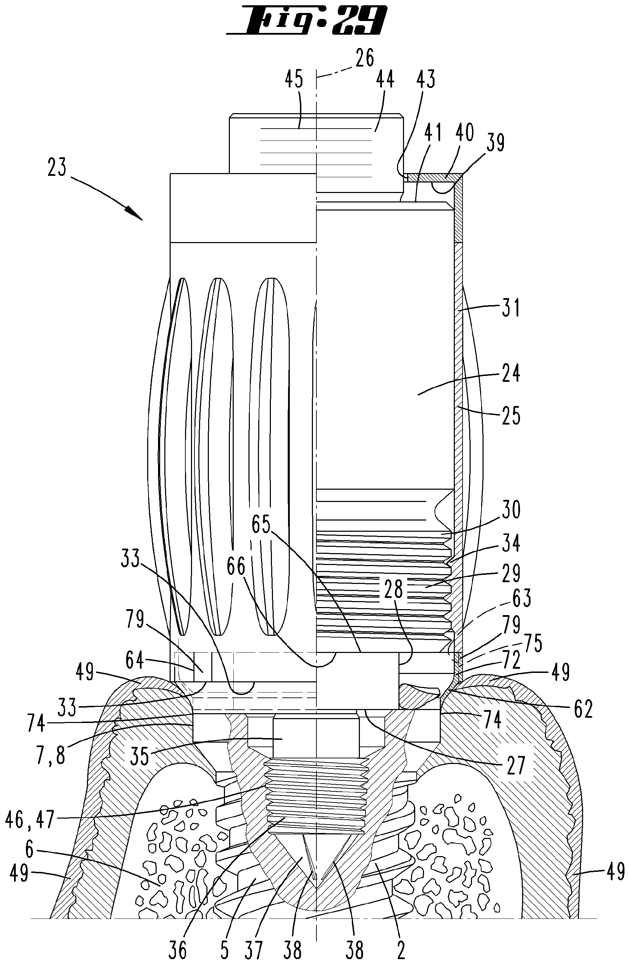

Fig. 28 zeigt schematisch, dass das Werkzeug zunächst mittels seiner Spitze 37 und der Schneidkanten 38 dazu verwendet werden kann, um das die Implantatstirnfläche 71 bedeckende Zahnfleisch 49 etwa mittig aufzutrennen und seitlich zu verdrängen. Dies ermöglicht, dass das Außengewinde 36 des Werkzeuginnenteils 24 in das Innengewinde 47 in dem Implantat 2 eingeschraubt wird, bis sich bei einer bestimmten Einschraubtiefe die Stirnfläche 27 des Werkzeuginnenteils 24 axial gegen die Implantatstirnfläche 71 abstützt. Auf diese Weise wird eine Befestigung und Zentrierung des Werkzeugs 23 an dem Implantat 2 erreicht. Anschließend kann die Hülse 31 relativ zu dem Werkzeuginnenteil 24 verdreht werden, so dass sich die Hülse 31 dabei auch axial in Richtung zu dem Implantat 2 hin bewegt. Die Scheiden 74 werden dabei helixförmig bewegt und erzeugen einen umlaufenden Schnitt im Zahnfleisch 49. Dies ist in Fig. 29 gezeigt. Das die Implantatstirnfläche 71 bedeckende Zahnfleisch 49 wird von dem übrigen Zahnfleisch 49 abgetrennt und kann nach dem Herausschrauben und Entnehmen des Werkzeugs 23 entfernt werden. Insofern könnte man den Schneidaufsatz 62 auch als Freilegungswerkzeug bezeichnen.

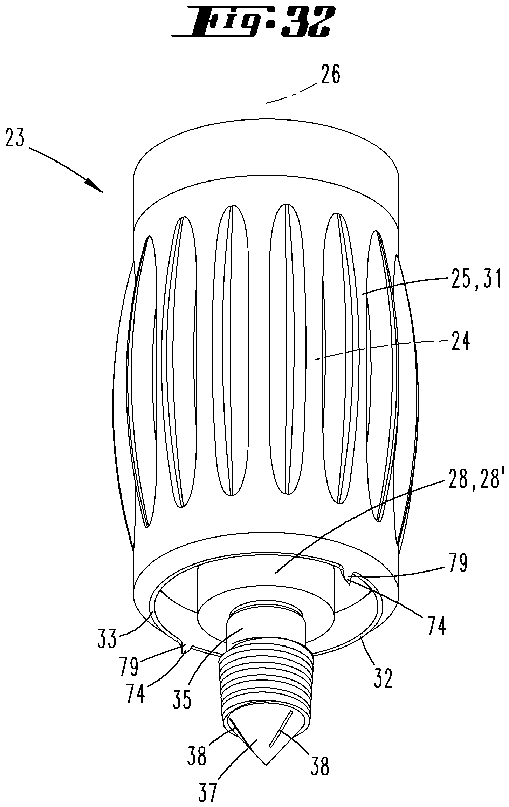

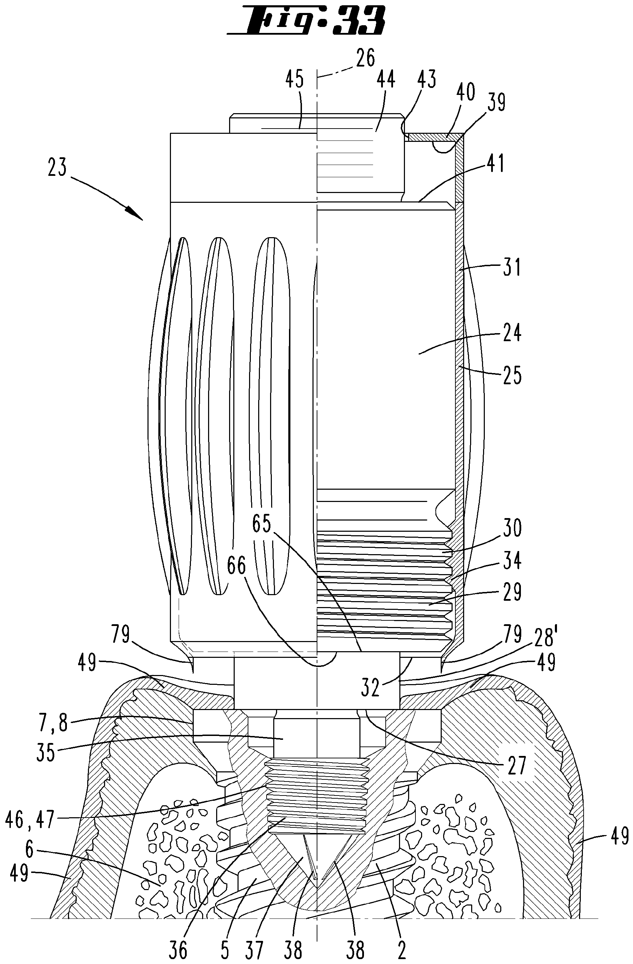

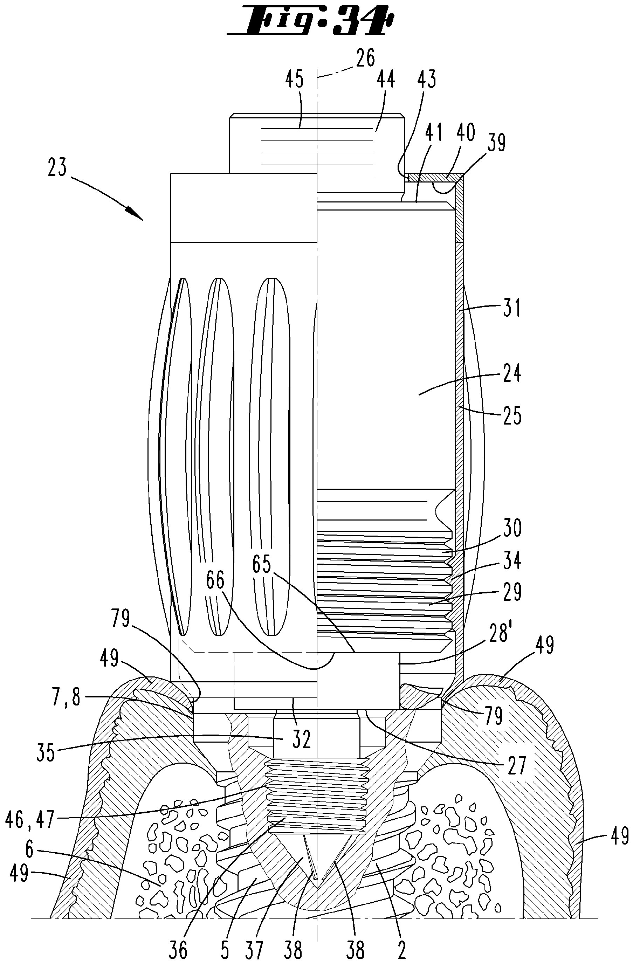

Die Fig. 32 bis 34 zeigen ein weiteres bevorzugtes Ausführungsbeispiel eines erfindungsgemäßen Werkzeugs 23. Wie besonders Fig. 33 in dem Teilschnitt zeigt, sind dort Skalpellvorsprünge 79 mit je einer Schneide 74 einstückig an dem ringförmigen distalen Hülsenlängsende 32 angeformt. Das in den Fig.32 bis 34 gezeigte Werkzeug 23 besitzt daher keinen abnehmbaren Schneidaufsatz 62. Wie die Fig. 33, 34 zeigen, kann aber dessen Anwendung zum Heraustrennen einer Kreisrunde aus Zahnfleisch 49 wie vorangehend beschrieben erfolgen.

Bei den beschriebenen Ausführungsbeispielen ist die kreisförmige Schneide 74 oder sind die an den Skalpellen 79 ausgebildeten Schneiden 74 so gestaltet, dass bei Gebrauch des Werkzeuges 23 ein entlang einer Kreislinie verlaufender Schnitt resultiert, dessen Durchmesser vorzugsweise dem Außendurchmesser der Implantataußenoberfläche 8 des Implantats 2 entspricht.

### LEERSEITE

**Liste der Bezugszeichen**

| | | | |
|---|---|---|---|
| 1 | Kombination | 28 | Aufsteckabschnitt |
| 2 | Implantat | 28' | Werkzeuginnenteil-Längenabschnitt |
| 3 | Kofferdamtuch | | |
| 4 | Haltemittel | 29 | Längenabschnitt |
| 5 | Gewindeabschnitt | 30 | externes Außengewinde |
| 6 | Kieferknochen | 31 | Hülse |
| 7 | Implantatendabschnitt | 32 | distales Hülsenlängsende |
| 8 | Implantataußenoberfläche | 33 | distale Hülsenstirnfläche |
| 9 | Ring | 34 | Hülseninnengewinde |
| 10 | Ringklemmabschnitt | 35 | Vorsprung |
| 11 | Ringdurchgangsöffnung | 36 | zweites Außengewinde |
| 12 | geometrische Ringmittelachse | 37 | Spitze |
| 13 | Ringschneidabschnitt | 38 | Schneidkanten |
| 14 | geometrische Kreiskontur | 39 | axialer Anschlag |
| 15 | Schneidkante | 40 | Ringdeckel |
| 16 | Sollbruchstelle | 41 | zweiter Anschlag |
| 17 | Innenoberfläche | 42 | dentalmedizinisches Set |
| 18 | Abschnitt | 43 | Durchgangsöffnung |
| 19 | Querschnittebene | 44 | Vorsprung |
| 20 | Griff | 45 | Skala |
| 21 | Griffsteg | 46 | Ausnehmung |
| 22 | Griffende | 47 | Innengewinde |
| 23 | dentalmedizinisches Werkzeug | 49 | Zahnfleisch |
| 24 | Werkzeuginnenteil | 50 | Kofferdamtuchabschnitt |
| 25 | Werkzeugaußenteil | 51 | Aufbau |
| 26 | Werkzeuglängsmittelachse | 52 | Hülse |
| 27 | Stirnfläche | 53 | Verschraubungskanal |
| 54 | Schraube | | |
| 55 | Außengewinde | | |
| 56 | Krone | | |
| 57 | Zement | a | Abstand |
| 58 | Wulst | b | Abstand |
| 59 | Fase | c | radialer Abstand |
| 60 | Aufsteckadapter | d | radialer Abstand |
| 61 | Schneidaufsatz | d₁ | Durchmesser |
| 62 | Schneidaufsatz | d₂ | Innendurchmesser |
| 63 | Oberfläche | d₃ | Außendurchmesser |
| 64 | Ausnehmung | d₄ | Außendurchmesser |
| 65 | Längsende | d₅ | Innendurchmesser |
| 66 | Oberfläche | d₆ | Außendurchmesser |
| 67 | Heilungskappe | d₇ | Außendurchmesser |
| 68 | Schaft | d₈ | Durchmesser |
| 69 | Außengewinde | d₉ | Durchmesser |
| 70 | Spalt | l₁ | Länge |
| 71 | Implantatstirnfläche | l₂ | Länge |
| 72 | Grundkörper | x | Dicke |
| 73 | Montageabschnitt | x' | Dicke |
| 74 | Schneide | | |
| 75 | Ausnehmung | A | Mittelachse |
| 76 | Zentrierabschnitt | B | Ringbreite |
| 77 | Skalpellvorsprung | E | Bezugsebene |
| 78 | ringförmige Stirnfläche | U | Umfangsrichtung |
| 79 | Vorsprung | | |

## Patentansprüche

1. Kombination (1), umfassend ein Implantat (2), ein Kofferdamtuch (3) und ein Haltemittel (4) zum lösbaren Halten des Kofferdamtuches (3) an einem Implantatendabschnitt (7) des Implantats (2), wobei das Haltemittel (4) einen, insbesondere kreisrunden, Ring (9) umfasst, der an seinem Umfang geschlossen ist und der einen eine Ringdurchgangsöffnung (11) berandenden Ringklemmabschnitt (10) aufweist, und wobei der Implantatendabschnitt (7) eine Implantataußenoberfläche (8) aufweist, **dadurch gekennzeichnet, dass** jeweils in Bezug auf einen entspannten Zustand des Ringklemmabschnittes (10), des Implantatendabschnittes (7) und des Kofferdamtuches (3), insbesondere bei axialer Projektionsbetrachtung, ein Innenumfang des Ringklemmabschnittes (10) größer ist als ein Außenumfang des Implantatendabschnittes (7) und gleich groß ist wie oder kleiner ist als ein äußerer Umfang, der, wenn das Kofferdamtuch (3) in entspanntem Zustand die Implantataußenoberfläche (8), daran einlagig anliegend, umschließt, an der Außenseite des Kofferdamtuches (3) resultiert.

2. Kombination (1) gemäß Anspruch 1, **dadurch gekennzeichnet, dass** die Implantataußenoberfläche (8) rotationssymmetrisch, insbesondere kreiszylindrisch ist.

3. Kombination (1) nach Anspruch 2, **dadurch gekennzeichnet, dass** jeweils in Bezug auf einen entspannten Zustand des Ringklemmabschnittes, des Implantatendabschnittes und des Kofferdamtuches, in einer axialen Projektionsbetrachtung der Ringklemmabschnitt (10) die Ringdurchgangsöffnung (11) kreisrund umschließt, wobei der Innendurchmesser (d₂) des Ringklemmabschnittes (10) um eine Durchmesserdifferenz größer ist als ein Außendurchmesser (d₄) der rotationssymmetrischen Implantataußenoberfläche (8) des Implantatendabschnittes (7), und wobei die Dicke des Kofferdamtuches (3) größer ist als oder gleich groß ist wie die Hälfte dieser Durchmesserdifferenz.

4. Kombination (1) gemäß Anspruch 2, **dadurch gekennzeichnet, dass** jeweils in Bezug auf einen entspannten Zustand des Ringklemmabschnittes, des Implantatendabschnittes und des Kofferdamtuches der Ringklemmabschnitt (10) die Ringdurchgangsöffnung (11) in zumindest einer zu der geometrischen Ringmittelachse (12) senkrechten Querschnittsebene (19) kreisrund umschließt, wobei in dieser Querschnittsebene (19) der Innendurchmesser (d₂) des Ringklemmabschnittes (10) um eine Durchmesserdifferenz größer ist als ein Außendurchmesser (d₄) der rotationssymmetrischen Implantataußenoberfläche (8) des Implantatendabschnittes (7), und wobei die Dicke des Kofferdamtuches (3) größer ist als oder gleich groß ist wie die Hälfte dieser Durchmesserdifferenz.

5. Kombination (1) gemäß einem oder mehreren der vorangehenden Ansprüche, **dadurch gekennzeichnet, dass** der Ring (9) einen zu dem Ringklemmabschnitt (10) benachbarten Ringschneidabschnitt (13) aufweist, an dem eine auf einer geometrischen Kreiskontur (14) liegende, insbesondere am Umfang geschlossene, Schneidkante (15) ausgebildet ist, wobei der Durchmesser (d₁) der Kreiskontur (14) kleiner als der Innendurchmesser (d₂) des Ringklemmabschnittes (10) ist.

6. Kombination (1) gemäß einem oder mehreren der vorangehenden Ansprüche, **dadurch gekennzeichnet, dass** der Ring (9), insbesondere in dem Ringklemmabschnitt (10), eine Sollbruchstelle (16) oder mehrere Sollbruchstellen (16) aufweist.

7. Kombination (1) gemäß einem oder mehreren der vorangehenden Ansprüche, **dadurch gekennzeichnet, dass** das Haltemittel (4) einen Griff (20) aufweist, der an dem Ringklemmabschnitt (10) und/oder an dem Ringschneidabschnitt (13) befestigt, insbesondere einstückig daran angeschlossen, ist, wobei der kleinste Querschnitt des Griffes (20) größer ist als der kleinste Querschnitt an der Sollbruchstelle (16) oder an einer jeweiligen Sollbruchstelle (16).

8. Kombination (1) gemäß einem oder mehreren der vorangehenden Ansprüche, **dadurch gekennzeichnet, dass** der Ring (9) aus elastisch verformbarem Material, bspw. aus Kunststoff, hergestellt ist und dass das Kofferdamtuch aus elastisch verformbarem Material, bspw. aus Gummi, insbesondere aus Latexgummi, hergestellt ist.

9. Kombination (1) gemäß einem oder mehreren der vorangehenden Ansprüche, **dadurch gekennzeichnet, dass** das Implantat (1) im Vergleich zu dem Ring einen höheren Elastizitätsmodul und/oder eine größere Härte und/oder eine höhere Festigkeit besitzt und/oder dass der Ring (9) im Vergleich zu dem Kofferdamtuch (3) einen höheren Elastizitätsmodul und/oder eine größere Härte und/oder eine höhere Festigkeit besitzt.

10. Kombination (1) gemäß einem oder mehreren der vorangehenden Ansprüche, **dadurch gekennzeichnet, dass** in zu der Umfangsrichtung (U) des Ringes (9) senkrechten Querschnitten des Ringes (9) die Ringstärke als hälftige Differenz zwischen dem Außendurchmesser (d₃) des Ringklemmabschnitts (10) und dem Durchmesser (d1) der Kreiskontur (14) im Vergleich zu der hierzu senkrechten Ringbreite (B) größer oder kleiner oder gleich groß ist.

11. Anordnung, umfassend eine Kombination (1), welche ein Implantat (2), ein Kofferdamtuch (3) und ein Haltemittel (4) aufweist, **dadurch gekennzeichnet, dass** es sich um eine Kombination gemäß einem oder mehreren der vorangehenden Ansprüche handelt, wobei es sich bei der Anordnung um einen zusammengesetzten Zustand des Implantats (2), des Kofferdamtuchs (3) und des Haltemittels (4) handelt, wobei das Kofferdamtuch (3) den Implantatendabschnitt (7) außen entlang seines gesamten Umfanges umgibt, und wobei der Ring (9) das den Implantatendabschnitt (7) umgebende Kofferdamtuch (3) außen entlang des gesamten Umfanges umgibt und das den Implantatendabschnitt (7) umgebende Kofferdamtuch (3) an den Implantatendabschnitt (7) andrückt.

12. Dentalmedizinisches Set (42), umfassend ein dentalmedizinisches Werkzeug (23) und eine Kombination (1), **dadurch gekennzeichnet, dass** das dentalmedizinische Werkzeug (23) ein Werkzeuginnenteil (24) und ein Werkzeugaußenteil (25) umfasst, dass das Werkzeuginnenteil (24) aufweist:
- eine Stirnfläche (27),
- einen an seiner Außenseite rotationssymmetrischen, insbesondere kreiszylindrischen, Aufsteckabschnitt (28), wobei der Aufsteckabschnitt (28) insbesondere an die Stirnfläche (27) angrenzt,
- und ein erstes Außengewinde (30);
und dass das Werkzeugaußenteil (25) aufweist:
- eine Hülse (31), die ein distales Hülsenlängsende (32), das insbesondere eine distale Hülsenstirnfläche (33) ausbildet, aufweist, und
- ein an der Hülse (31) innenseitig ausgebildetes, zu dem ersten Außengewinde (30) passendes Hülseninnengewinde (34);
wobei der axiale Abstand (a) zwischen der Stirnfläche (27) des Werkzeuginnenteils (24) und dem distalen Längsende des ersten Außengewindes (30), die Länge (11) des Außengewindes (30), ein axialer Abstand (b) zwischen dem distalen Hülsenlängsende (32) und dem proximalen Längsende des Hülseninnengewindes (34) sowie die Länge (12) des Hülseninnengewindes (34) so aufeinander abgestimmt sind, dass das Werkzeugaußenteil (25), ausgehend von einer ersten, relativ zu dem Werkzeuginnenteil (24) gegebenen Position mittels Drehung des Werkzeugaußenteils (25) relativ zu dem Werkzeuginnenteil (24) zufolge des Gewindeeingriffes zwischen dem ersten Außengewinde (30) und dem Hülseninnengewinde (34) relativ zu dem Werkzeuginnenteil (24) so weit in distaler Richtung bewegbar ist, dass dabei eine Bewegung des distalen Hülsenlängsendes (32) zumindest entlang eines Längenteilabschnittes des Aufsteckabschnittes (28) resultiert, insbesondere bis zu der Stirnfläche des Werkzeuginnenteils (24) und insbesondere bis über die Stirnfläche (27) des Werkzeuginnenteils (24) hinaus,
dass das Werkzeuginnenteil (24) einen sich zentral in distaler Richtung über die Stirnfläche (27) hinaus erstreckenden Vorsprung (35) aufweist, an dem ein zweites Außengewinde (36) ausgebildet ist, wobei das zweite Außengewinde (36) im Vergleich zu dem ersten Außengewinde (30) einen kleineren Gewindedurchmesser besitzt,
dass es sich bei der Kombination (1) um eine Kombination (1) gemäß einem oder mehreren der vorangehenden Ansprüche 1 bis 10 handelt, dass das Implantat (2) an dem Implantatendabschnitt (7) eine an seinem proximalen Ende offene Ausnehmung (46) mit einem darin ausgebildeten Innengewinde (47) aufweist und dass dieses Innengewinde (47) zu dem an dem Vorsprung (35) ausgebildeten zweiten Außengewinde (36) des Werkzeuginnenteils (24) passt.

13. Dentalmedizinisches Set (42) gemäß Anspruch 12, **dadurch gekennzeichnet, dass** der Gewindeeingriff zwischen dem ersten Außengewinde (30) und dem Hülseninnengewinde (34) einen größeren Leerlauf-Drehwiderstand hat als ein Gewindeeingriff zwischen dem zweiten Außengewinde (36) und dem Innengewinde (47) des Implantatendabschnittes (7).

14. Dentalmedizinisches Set (42) gemäß einem oder mehreren der Ansprüche 12-13, **dadurch gekennzeichnet, dass** der stirnseitige Außendurchmesser (d₆) des Aufsteckabschnittes (28) dem stirnseitigen Außendurchmesser (d₄) des Implantatendabschnittes (7) entspricht.

## Claims

1. Combination (1), comprising an implant (2), a dental dam (3) and a holding means (4) for releasably holding the dental dam (3) on an implant end portion (7) of the implant (2), the holding means (4) comprising a ring (9), which is in particular circular and which is closed on its circumference and has a ring clamping portion (10) bordering a ring through-opening (11), and the implant end portion (7) having an implant outer surface (8), **characterised in that**, with respect to a relaxed state of each of the ring clamping portion (10), the implant end portion (7) and the dental dam (3), in particular when viewed in an axial projection, an inner circumference of the ring clamping portion (10) is larger than an outer circumference of the implant end portion (7) and equal to or smaller than an outer circumference which results on the outside of the dental dam (3) when the dental dam (3) surrounds the implant outer surface (8) in a relaxed state, resting thereon in a single layer.

2. Combination (1) according to claim 1, **characterised in that** the implant outer surface (8) is rotationally symmetrical, in particular circular-cylindrical.

3. Combination (1) according to claim 2, **characterised in that**, with respect to a relaxed state of each of the ring clamping portion, the implant end portion and the dental dam, when viewed in an axial projection, the ring clamping portion (10) surrounds the ring through-opening (11) in a circular manner, the inner diameter (d₂) of the ring clamping portion (10) being larger by a diameter difference than an outer diameter (d₄) of the rotationally symmetrical implant outer surface (8) of the implant end portion (7), and the thickness of the dental dam (3) being greater than or equal to half of this diameter difference.

4. Combination (1) according to claim 2, **characterised in that**, with respect to a relaxed state of each of the ring clamping portion, the implant end portion and the dental dam, the ring clamping portion (10) surrounds the ring through-opening (11) in a circular manner in at least one cross-sectional plane (19) that is perpendicular to the geometric ring centre axis (12), the inner diameter (d₂) of the ring clamping portion (10) being larger in this cross-sectional plane (19) by a diameter difference than an outer diameter (d₄) of the rotationally symmetrical implant outer surface (8) of the implant end portion (7), and the thickness of the dental dam (3) being greater than or equal to half of this diameter difference.

5. Combination (1) according to one or more of the preceding claims, **characterised in that** the ring (9) has a ring cutting portion (13) adjacent to the ring clamping portion (10), on which ring cutting portion a cutting edge (15), which rests on a geometric circular contour (14) and is in particular closed on the circumference, is formed, the diameter (d₁) of the circular contour (14) being smaller than the inner diameter (d₂) of the ring clamping portion (10).

6. Combination (1) according to one or more of the preceding claims, **characterised in that** the ring (9), in particular in the ring clamping portion (10), has a predetermined breaking point (16) or a plurality of predetermined breaking points (16).

7. Combination (1) according to one or more of the preceding claims, **characterised in that** the holding means (4) has a handle (20) which is fastened to the ring clamping portion (10) and/or to the ring cutting portion (13), in particular integrally attached thereto, the smallest cross section of the handle (20) being larger than the smallest cross section at the predetermined breaking point (16) or at each predetermined breaking point (16).

8. Combination (1) according to one or more of the preceding claims, **characterised in that** the ring (9) is made of elastically deformable material, for example plastics material, and **in that** the dental dam is made of elastically deformable material, for example rubber, in particular latex rubber.

9. Combination (1) according to one or more of the preceding claims, **characterised in that** the implant (1) has a higher modulus of elasticity and/or greater hardness and/or greater strength compared with the ring, and/or **in that** the ring (9) has a higher modulus of elasticity and/or greater hardness and/or greater strength compared with the dental dam (3).

10. Combination (1) according to one or more of the preceding claims, **characterised in that**, in cross sections of the ring (9) which are perpendicular to the circumferential direction (U) of the ring (9), the ring thickness is larger or smaller than or equal to half the difference between the outer diameter (d₃) of the ring clamping portion (10) and the diameter (d1) of the circular contour (14) in comparison to the ring width (B) which is perpendicular thereto.

11. Arrangement comprising a combination (1) which has an implant (2), a dental dam (3) and a holding means (4), **characterised in that** it is a combination according to one or more of the preceding claims, the arrangement being the implant (2), the dental dam (3) and the holding means (4) in an assembled state, the dental dam (3) surrounding the implant end portion (7) externally along its entire circumference, and the ring (9) surrounding the dental dam (3) that surrounds the implant end portion (7) externally along the entire circumference and the dental dam (3) that surrounds the implant end portion (7) pressing against the implant end portion (7).

12. Dental set (42) comprising a dental tool (23) and a combination (1), **characterised in that** the dental tool (23) comprises a tool inner part (24) and a tool outer part (25), **in that** the tool inner part (24) has:
- an end face (27),
- a plug-in portion (28) which is rotationally symmetrical on its outside and is in particular circular-cylindrical, the plug-in portion (28) in particular adjoining the end face (27),
- and a first external thread (30);
and **in that** the tool outer part (25) has:
- a sleeve (31) which has a distal sleeve longitudinal end (32), which in particular forms a distal sleeve end face (33), and
- a sleeve internal thread (34) which is formed on the inside of the sleeve (31) and matches the first external thread (30);
the axial distance (a) between the end face (27) of the tool inner part (24) and the distal longitudinal end of the first external thread (30), the length (11) of the external thread (30), an axial distance (b) between the distal sleeve longitudinal end (32) and the proximal longitudinal end of the sleeve internal thread (34), and the length (12) of the sleeve internal thread (34) being matched to one another in such a way that the tool outer part (25), starting from a first position relative to the tool inner part (24), and via rotation of the tool outer part (25) relative to the tool inner part (24) as a result of the thread engagement between the first external thread (30) and the sleeve internal thread (34) relative to the tool inner part (24), can be moved so far in the distal direction that a movement of the distal sleeve longitudinal end (32) results therefrom, at least along a partial longitudinal portion of the plug-in portion (28), in particular up to the end face of the tool inner part (24) and in particular beyond the end face (27) of the tool inner part (24), **in that** the tool inner part (24) has a projection (35) which extends centrally in the distal direction beyond the end face (27) and on which a second external thread (36) is formed, the second external thread (36) having a smaller thread diameter in comparison with the first external thread (30),
**in that** the combination (1) is a combination (1) according to one or more of the preceding claims 1 to 10, **in that** the implant (2), at the implant end portion (7), has a recess (46) which is open at its proximal end and has an internal thread (47) formed therein, and **in that** this internal thread (47) fits the second external thread (36) of the tool inner part (24) formed on the projection (35).

13. Dental set (42) according to claim 12, **characterised in that** the thread engagement between the first external thread (30) and the sleeve internal thread (34) has a greater no-load rotational resistance than a thread engagement between the second external thread (36) and the internal thread (47) of the implant end portion (7).

14. Dental set (42) according to one or both of claims 12-13, **characterised in that** the end-face outer diameter (d₆) of the plug-in portion (28) corresponds to the end-face outer diameter (d₄) of the implant end portion (7).

## Revendications

1. Combinaison (1) comprenant un implant (2), une digue dentaire (3) et un moyen de maintien (4) pour maintenir de manière amovible la digue dentaire (3) sur une partie terminale d'implant (7) de l'implant (2), dans laquelle le moyen de maintien (4) comprend un anneau (9), en particulier un anneau circulaire (9), qui est fermé sur sa circonférence et qui présente une partie de serrage d'anneau (10) bordant une ouverture de passage d'anneau (11), et dans lequel la partie extrémale d'implant (7) présente une surface extérieure d'implant (8), **caractérisé en ce que**, à chaque fois par rapport à un état détendu de la partie de serrage d'anneau (10), de la partie terminale d'implant (7) et de la digue dentaire (3), en particulier dans une vue en projection axiale, une circonférence intérieure de la partie de serrage d'anneau (10) est plus grande qu'une circonférence extérieure de la partie terminale d'implant (7) et est égale ou inférieure à une circonférence extérieure qui résulte sur l'extérieur de la digue dentaire (3) lorsque la digue dentaire (3) à l'état détendu entoure la surface extérieure d'implant (8) en reposant contre celle-ci en une seule couche.

2. Combinaison (1) selon la revendication 1, **caractérisée en ce que** la surface extérieure d'implant (8) est à symétrie de révolution, en particulier cylindrique circulaire.

3. Combinaison (1) selon la revendication 2, **caractérisée en ce que**, à chaque fois par rapport à un état détendu de la partie de serrage d'anneau, de la partie terminale d'implant et de la digue dentaire, dans une vue en projection axiale, la partie de serrage d'anneau (10) entoure l'ouverture de passage d'anneau (11) de manière circulaire, dans lequel le diamètre intérieur (d₂) de la partie de serrage d'anneau (10) est supérieur d'une différence de diamètre à un diamètre extérieur (d₄) de la surface extérieure d'implant (8) à symétrie de révolution de la partie d'extrémité d'implant (7), et dans lequel l'épaisseur de la digue dentaire (3) est supérieure ou égale à la moitié de cette différence de diamètre.

4. Combinaison (1) selon la revendication 2, **caractérisée en ce que**, à chaque fois par rapport à un état détendu de la partie de serrage d'anneau, de la partie terminale d'implant et de la digue dentaire, la partie de serrage d'anneau (10) entoure de manière circulaire l'ouverture de passage d'anneau (11) dans au moins un plan de coupe transversale (19) perpendiculaire à l'axe central géométrique d'anneau (12), dans lequel, dans ce plan de coupe transversale (19), le diamètre intérieur (d₂) de la partie de serrage d'anneau (10) est supérieur d'une différence de diamètre à un diamètre extérieur (d₄) de la surface extérieure d'implant (8) à symétrie de révolution de la partie terminale d'implant (7), et dans lequel l'épaisseur de la digue dentaire (3) est supérieure ou égale à la moitié de cette différence de diamètre.

5. Combinaison (1) selon une ou plusieurs des revendications précédentes, **caractérisée en ce que** l'anneau (9) présente une partie de coupe d'anneau (13) adjacente à la partie de serrage d'anneau (10), sur laquelle est formée une arête de coupe (15) située sur un contour circulaire géométrique (14) et qui en particulier est fermée sur la circonférence, le diamètre (d₁) du contour circulaire (14) étant inférieur au diamètre intérieur (d₂) de la partie de serrage d'anneau (10).

6. Combinaison (1) selon une ou plusieurs des revendications précédentes, **caractérisée en ce que** l'anneau (9) présente en particulier dans la partie de serrage d'anneau (10) une ou plusieurs zones de rupture prédéfinies (16).

7. Combinaison (1) selon une ou plusieurs des revendications précédentes, **caractérisée en ce que** le moyen de maintien (4) comprend une poignée (20) qui est fixée à la partie de serrage d'anneau (10) et/ou à la partie de coupe d'anneau (13), en particulier est reliée à celle-ci d'un seul tenant, dans laquelle la plus petite section transversale de la poignée (20) est plus grande que la plus petite section transversale au niveau de la zone de rupture prédéfinie (16) ou au niveau d'une zone de rupture prédéfinie (16) respective.

8. Combinaison (1) selon une ou plusieurs des revendications précédentes, **caractérisée en ce que** l'anneau (9) est en matière élastiquement déformable, par exemple en matière plastique, et que la digue dentaire est en matière élastiquement déformable, par exemple en caoutchouc, en particulier en latex.

9. Combinaison (1) selon une ou plusieurs des revendications précédentes, **caractérisée en ce que** l'implant (1) a par rapport à l'anneau un module d'élasticité plus élevé et/ou une plus grande dureté et/ou une plus grande résistance et/ou que l'anneau (9) a par rapport à la digue dentaire (3) un module d'élasticité plus élevé et/ou une plus grande dureté et/ou une plus grande résistance.

10. Combinaison (1) selon une ou plusieurs des revendications précédentes, **caractérisée en ce que** dans des sections transversales de l'anneau (9) perpendiculaires à la direction circonférentielle (U) de l'anneau (9), l'épaisseur de l'anneau qui est égale à la moitié de la différence entre le diamètre extérieur (d₃) de la partie de serrage d'anneau (10) et le diamètre (d₁) du contour circulaire (14), est supérieure ou inférieure ou égale à la largeur (B) de l'anneau perpendiculairement à celle-ci.

11. Agencement comprenant une combinaison (1) comportant un implant (2), une digue dentaire (3) et un moyen de maintien (4), **caractérisé en ce qu'**il s'agit d'une combinaison selon une ou plusieurs des revendications précédentes, dans lequel agencement l'implant (2), la digue dentaire (3) et le moyen de maintien (4) sont dans un état assemblé, dans lequel la digue dentaire (3) entoure la partie terminale d'implant (7) extérieurement sur toute sa circonférence, et dans lequel l'anneau (9) entoure extérieurement sur toute la circonférence la digue dentaire (3) entourant la partie terminale d'implant (7) et presse la digue dentaire (3) entourant la partie terminale d'implant (7) contre la partie terminale d'implant (7).

12. Ensemble dentaire (42) comprenant un outil dentaire (23) et une combinaison (1), **caractérisé en ce que** l'outil dentaire (23) comprend une partie intérieure d'outil (24) et une partie extérieure d'outil (25), que la partie intérieure d'outil (24) présente :
- une surface frontale (27),
- une partie enfichable (28) à symétrie de révolution sur sa face extérieure, en particulier cylindrique circulaire, la partie enfichable (28) étant en particulier attenante à la surface frontale (27),
- et un premier filetage extérieur (30) ;
et **en ce que** la partie extérieure d'outil (25) comprend :
- une douille (31) ayant une extrémité longitudinale distale de douille (32) qui forme en particulier une surface frontale distale de douille (33), et
- un filetage intérieur de douille (34) formé sur l'intérieur de la douille (31) et correspondant au premier filetage extérieur (30) ;
dans lequel la distance axiale (a) entre la surface frontale (27) de la partie intérieure d'outil (24) et l'extrémité longitudinale distale du premier filetage extérieur (30), la longueur (l1) du filetage extérieur (30), une distance axiale (b) entre l'extrémité longitudinale distale de douille (32) et l'extrémité longitudinale proximale du filetage intérieur de douille (34), et la longueur (12) du filetage intérieur de douille (34) sont adaptées les unes aux autres de telle manière que la partie extérieure d'outil (25), à partir d'une première position donnée par rapport à la partie intérieure d'outil (24) par rotation de la partie extérieure d'outil (25) par rapport à la partie intérieure d'outil (24) du fait de l'engagement de filetages entre le premier filetage extérieur (30) et le filetage intérieur de douille (34), puisse être déplacée par rapport à la partie intérieure d'outil (24) si loin dans la direction distale qu'il en résulte un déplacement de l'extrémité longitudinale distale de douille (32) au moins le long d'une partie longitudinale de la partie d'enfichage (28), en particulier jusqu'à la surface frontale de la partie intérieure d'outil (24) et en particulier au-delà de la surface frontale (27) de la partie intérieure d'outil (24),
**en ce que** la partie intérieure d'outil (24) présente une saillie (35) qui s'étend centralement dans la direction distale au-delà de la surface frontale (27) et sur laquelle est formé un deuxième filetage extérieur (36), le deuxième filetage extérieur (36) ayant un diamètre de filetage plus petit en comparaison au premier filetage extérieur (30),
**en ce que** la combinaison (1) est une combinaison (1) selon une ou plusieurs des revendications précédentes 1 à 10, **en ce que** l'implant (2) présente à la partie terminale d'implant (7) un évidement (46) ouvert à son extrémité proximale avec un filetage intérieur (47) formé dans celui-ci et **en ce que** ce filetage intérieur (47) correspond au deuxième filetage extérieur (36) de la partie intérieure d'outil (24) qui est formé sur la saillie (35).

13. Ensemble dentaire (42) selon la revendication 12, **caractérisé en ce que** l'engagement de filetages entre le premier filetage extérieur (30) et le filetage intérieur de douille (34) a une résistance à la rotation à vide plus grande qu'un engagement de filetage entre le deuxième filetage extérieur (36) et le filetage intérieur (47) de la partie terminale d'implant (7).

14. Ensemble dentaire (42) selon une ou plusieurs des revendications 12 à 13, **caractérisé en ce que** le diamètre extérieur (d₆) côté frontal de la partie enfichable (28) correspond au diamètre extérieur (d₄) côté frontal de la partie terminale d'implant (7).
